(19) Europäisches Patentamt
European Patent Office
Office européen des brevets

(11) **EP 4 510 686 A1**

(12) **EUROPEAN PATENT APPLICATION**
published in accordance with Art. 153(4) EPC

(43) Date of publication:
**19.02.2025 Bulletin 2025/08**

(21) Application number: **22937487.1**

(22) Date of filing: **15.04.2022**

(51) International Patent Classification (IPC):
**H04W 24/10** (2009.01)    **H04W 72/0457** (2023.01)

(52) Cooperative Patent Classification (CPC):
**H04W 24/10; H04W 72/0457**

(86) International application number:
**PCT/JP2022/017917**

(87) International publication number:
**WO 2023/199510 (19.10.2023 Gazette 2023/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
- **MATSUMURA, Yuki**
  **Tokyo 100-6150 (JP)**
- **NAGATA, Satoshi**
  **Tokyo 100-6150 (JP)**
- **WANG, Jing**
  **Beijing 100190 (CN)**
- **CHEN, Lan**
  **Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57) A terminal according to one aspect of the present disclosure includes a control section that determines channel state information (CSI), based on a plurality of measurements respectively corresponding to a plurality of panels used for coherent joint transmission, and a transmitting section that transmits a CSI report including the CSI. According to one aspect of the present disclosure, a CSI report for CJT can be appropriately performed.

| CSI part 1 for CJT CSI for 4 TRPs |
| --- |
| CSI part 1 for CJT CSI, common contents for 4 TRPs |
| CSI part 1 for CJT CSI, separate contents for 1st TRP |
| CSI part 1 for CJT CSI, separate contents for 2nd TRP |
| CSI part 1 for CJT CSI, separate contents for 3rd TRP |
| CSI part 1 for CJT CSI, separate contents for 4th TRP |

| CSI part 2 for CJT CSI for 4 TRPs |
| --- |
| CSI part 2 for CJT CSI, common contents for 4 TRPs |
| CSI part 2 for CJT CSI, separate contents for 1st TRP |
| CSI part 2 for CJT CSI, separate contents for 2nd TRP |
| CSI part 2 for CJT CSI, separate contents for 3rd TRP |
| CSI part 2 for CJT CSI, separate contents for 4th TRP |

FIG. 30

EP 4 510 686 A1

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In future radio communication systems (for example, NR), reporting channel state information (CSI) based on reception of a reference signal has been under study. A plurality of transmission/reception points (multiple Transmission/Reception Points (TRPs), a multi TRP (MTRP)) or a plurality of panels (multiple panels, a multi-panel) performing DL transmission to a terminal (a user terminal, a User Equipment (UE)) has been under study. Coherent joint transmission (CJT) using the multi TRP/multi-panel has been under study.

However, a configuration/report of the CSI for CJT has not been under study. Unless such a method is clearly defined, communication throughput, communication quality, and the like may deteriorate.

In view of this, the present disclosure has one object to provide a terminal, a radio communication method, and a base station that appropriately perform a CSI report for CJT. Solution to Problem

A terminal according to one aspect of the present disclosure includes a control section that determines channel state information (CSI), based on a plurality of measurements respectively corresponding to a plurality of panels used for coherent joint transmission, and a transmitting section that transmits a CSI report including the CSI.

Advantageous Effects of Invention

According to one aspect of the present disclosure, a CSI report for CJT can be appropriately performed.

Brief Description of Drawings

[FIG. 1] FIG. 1 shows an example of a MIMO antenna model. [FIG. 2] FIG. 2 shows an example of a maximum number of antenna model elements.
[FIG. 3] FIG. 3 shows an example of an antenna model for a type 1 single panel.
[FIG. 4] FIG. 4 shows an example of an antenna model for a type 1 multi-panel.
[FIG. 5] FIG. 5 shows an example of a 16-level quantization table.
[FIG. 6] FIG. 6 shows an example of an 8-level quantization table.
[FIG. 7] FIG. 7 shows an example of transmission using K CSI-RS ports.
[FIG. 8] FIGS. 8A and 8B show examples of a Rel-16 type 2 port selection codebook.

[FIG. 9] FIGS. 9A and 9B show examples of a Rel-17 type 2 port selection codebook.

[FIG. 10] FIGS. 10A and 10B show examples of NCJT and CJT.

[FIG. 11] FIGS. 11A and 11B show examples of an inter-site multi TRP and an intra-site multi TRP.

[FIG. 12] FIG. 12 shows an example of option 1-1.

[FIG. 13] FIG. 13 shows another example of option 1-1.

[FIG. 14] FIG. 14 shows an example of option 1-2.

[FIG. 15] FIGS. 15A and 15B show examples of option 2-A.

[FIG. 16] FIG. 16 shows an example of CJT CSI of option 3-A.

[FIG. 17] FIG. 17 shows an example of a codebook of option 3-A.

[FIG. 18] FIG. 18 shows an example of CJT CSI of option 3-B.

[FIG. 19] FIG. 19 shows an example of a codebook of option 3-B.

[FIG. 20] FIG. 20 shows an example of CJT CSI of option 3-C.

[FIG. 21] FIG. 21 shows an example of CJT CSI of option 3-D.

[FIG. 22] FIG. 22 shows an example of a new table for an inter-TRP amplitude codebook.

[FIG. 23] FIG. 23 shows an example of a new table for an inter-TRP phase codebook.

[FIG. 24] FIG. 24 shows an example of a new table for an inter-TRP coefficient codebook.

[FIG. 25] FIGS. 25A and 25B show examples of mapping order of CSI parts 1 and 2 according to Embodiment #A5.

[FIG. 26] FIGS. 26A and 26B show examples of restriction 2.

[FIG. 27] FIG. 27 shows an example of a report 2a-1.

[FIG. 28] FIG. 28 shows an example of a report 2a-2.

[FIG. 29] FIG. 29 shows an example of a report 2b.

[FIG. 30] FIG. 30 shows an example of the CSI parts 1 and 2 according to Embodiment #C4.

[FIG. 31] FIG. 31 is a diagram to show an example of a schematic structure of a radio communication system according to one embodiment.

[FIG. 32] FIG. 32 is a diagram to show an example of a structure of a base station according to one embodiment.

[FIG. 33] FIG. 33 is a diagram to show an example of a structure of a user terminal according to one embodiment.

[FIG. 34] FIG. 34 is a diagram to show an example of a hardware structure of the base station and the user terminal according to one embodiment.

[FIG. 35] FIG. 35 is a diagram to show an example of a vehicle according to one embodiment.

Description of Embodiments

(CSI Report (or Reporting))

In Rel-15 NR, a terminal (also referred to as a user terminal, a User Equipment (UE), and the like) generates (also referred to as determines, calculates, estimates, measures, and the like) channel state information (CSI), based on a reference signal (RS) (or a resource for the RS), and transmits (also referred to as reports, feeds back, and the like) the generated CSI to a network (for example, a base station). The CSI may be transmitted to the base station by using an uplink control channel (for example, a Physical Uplink Control Channel (PUCCH)) or an uplink shared channel (for example, Physical Uplink Shared Channel (PUSCH)), for example.

The RS used for the generation of the CSI may be at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like, for example.

The CSI-RS may include at least one of a non-zero power (NZP) CSI-RS and CSI-Interference Management (CSI-IM). The SS/PBCH block is a block including the SS and the PBCH (and a corresponding DMRS), and may be referred to as an SS block (SSB) or the like. The SS may include at least one of a primary synchronization signal (PSS) and a secondary synchronization signal (SSS).

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), and the like.

The UE may receive information (report configuration information) related to a CSI report, and control the CSI report, based on the report configuration information. The report configuration information may be, for example, a radio resource control (RRC) information element (IE) "CSI-ReportConfig". Note that, in the present disclosure, the RRC IE may be interchangeably interpreted as an RRC parameter, a higher layer parameter, and the like.

The report configuration information (for example, the RRC IE "CSI-ReportConfig") may include at least one of the following, for example.

- Information (report type information, for example, an RRC IE "reportConfigType") related to a type of the CSI report
- Information (report quantity information, for example, an RRC IE "reportQuantity") related to one or more quantities (one or more CSI parameters) of the CSI to be reported
- Information (resource information, for example, an RRC IE "CSI-ResourceConfigId") related to the resource for the RS used for generation of the quantity (the CSI parameter)
- Information (frequency domain information, for example, an RRC IE "reportFreqConfiguration") related to the frequency domain being a target of the CSI report

For example, the report type information may indicate a periodic CSI (P-CSI) report, an aperiodic CSI (A-CSI) report, or a semi-persistent (semi-permanent) CSI report (SP-CSI) report.

The report quantity information may indicate at least one combination of the CSI parameters (for example, the CRI, the RI, the PMI, the CQI, the LI, the L1-RSRP, and the like).

The resource information may be an ID of the resource for the RS. The resource for the RS may include, for example, a non-zero power CSI-RS resource or SSB, and a CSI-IM resource (for example, a zero power CSI-RS resource).

The frequency domain information may indicate frequency granularity of the CSI report. The frequency granularity may include, for example, a wideband and a subband. The wideband is the entire CSI reporting band. The wideband may be, for example, an entire certain carrier (component carrier (CC), cell, serving cell), or may be an entire bandwidth part (BWP) in a certain carrier. The wideband may be interpreted as CSI reporting band, the entire CSI reporting band, and the like.

The subband may be part of the wideband and constituted of one or more resource blocks (RBs or physical resource blocks (PRBs)). The size of the subband may be determined according to the size of the BWP (the number of PRBs).

The frequency domain information may indicate which of the PMI of the wideband or of the subband is to be reported (the frequency domain information may include, for example, an RRC IE "pmi-FormatIndicator" used for determining any of a wideband PMI report and a subband PMI report). The UE may determine frequency granularity of the CSI report (that is, any of the wideband PMI report and the subband PMI report), based on at least one of the report quantity information and the frequency domain information.

When the wideband PMI report is configured (determined), one wideband PMI may be reported for the entire CSI reporting band. In contrast, when the subband PMI report is configured, a single wideband indication i1 may be reported for the entire CSI reporting band, and subband indication (one subband indication) i2 of each of one or more subbands (for example, the subband indication of each subband) in the entire CSI report may be reported.

The UE performs channel estimation by using a received RS, and estimates a channel matrix H. The UE feeds back an index (PMI) that is determined based on the estimated channel matrix.

The PMI may indicate a precoder matrix (also simply referred to as a precoder) that the UE considers appropriate for the use for downlink (DL) transmission to the UE. Each value of the PMI may correspond to one precoder matrix. A set of values of the PMI may correspond to a different set of precoder matrices referred to as a precoder codebook (also simply referred to as a codebook).

In the space domain, the CSI report may include one or more types of CSI. For example, the CSI may include at least one of a first type (type 1 CSI) that is used for selection of a single beam and a second type (type 2 CSI) that is used for selection of a multi-beam. The single beam may be interpreted as a single layer, and the multi-beam may be interpreted as a plurality of beams. The type 1 CSI may not assume multi user multiple input multiple output (MIMO), and the type 2 CSI may assume multi user MIMO.

The codebook may include a codebook for the type 1 CSI (also referred to as a type 1 codebook or the like) and a codebook for the type 2 CSI (also referred to as a type 2 codebook or the like). The type 1 CSI may include type 1 single-panel CSI and type 1 multi-panel CSI, and different codebooks (type 1 single-panel codebook, type 1 multi-panel codebook) may be respectively defined.

In the present disclosure, Type 1 and Type I may be interchangeably interpreted. In the present disclosure, Type 2 and Type II may be interchangeably interpreted.

Uplink control information (UCI) types may include at least one of a Hybrid Automatic Repeat reQuest ACKnowledgement (HARQ-ACK), a scheduling request (SR), and CSI. The UCI may be carried on the PUCCH, or may be carried on the PUSCH.

In Rel-15 NR, the UCI can include one CSI part for wideband PMI feedback. CSI report #n includes PMI wideband information if being reported.

In Rel-15 NR, the UCI can include two CSI parts for subband PMI feedback. CSI part 1 includes wideband PMI information. CSI part 2 includes one piece of wideband PMI information and some pieces of subband PMI information. The CSI part 1 and the CSI part 2 are separately coded.

In Rel-15 NR, the UE is configured with report setting of N ($N \geq 1$) CSI report configurations and resource setting of M (M ≥ 1) CSI resource configurations by a higher layer. For example, the CSI report configuration (CSI-ReportConfig) includes resource setting for channel measurement (resourcesForChannelMeasurement), CSI-IM resource setting for interference (csi-IM-ResourceForInterference), NZP-CSI-RS setting for interference (nzp-CSI-RS-ResourceForInterference), report quantity (reportQuantity), and the like. Each of the resource setting for channel measurement, the CSI-IM resource setting for interference, and the NZP-CSI-RS setting for interference is associated with the CSI resource configuration (CSI-ResourceConfig, CSI-ResourceConfigId). The CSI resource configuration includes a list of CSI-RS resource sets (csi-RS-ResourceSetList, for example, an NZP-CSI-RS resource set or a CSI-IM resource set).

In order to enable more dynamic channel/interference hypotheses for NCJT, targeting both of FR1 and FR2, evaluation and definition of the CSI report for transmission of at least one of the multi TRP and the multi-panel in the DL has been under study.

(Multi TRP)

In NR, a scheme in which one or a plurality of transmission/reception points (TRPs) (multi TRP (MTRP)) perform DL transmission to the UE by using one or a plurality of panels (multi panel) has been under study. A scheme in which the UE performs UL transmission to one or a plurality of TRPs by using one or a plurality of panels has been under study.

Note that the plurality of TRPs may correspond to the same cell identifier (ID), or may correspond to different cell IDs. The cell ID may be a physical cell ID, or may be a virtual cell ID.

The multi TRP (TRPs #1 and #2) are connected with an ideal/non-ideal backhaul, and information, data, and the like may be exchanged therebetween. Different codewords (CWs) and different layers may be transmitted from each TRP of the multi TRP. As one mode of multi TRP transmission, non-coherent joint transmission (NCJT) may be used.

In NCJT, for example, TRP1 performs modulation mapping of a first codeword and performs layer mapping so as to transmit a first PDSCH by using first precoding for a first number of layers (for example, two layers). TRP2 performs modulation mapping of a second codeword and performs layer mapping so as to transmit a second PDSCH by using second precoding for a second number of layers (for example, two layers).

Note that it may be defined that a plurality of PDSCHs (multi PDSCH) subjected to NCJT partially or entirely overlap in at least one of time and frequency domains. In other words, at least one of the time and frequency resources of the first PDSCH from the first TRP and the second PDSCH from the second TRP may overlap.

It may be assumed that these first PDSCH and second PDSCH are not in a relationship of quasi-co-location (QCL) (not quasi-co-located). Reception of the multi PDSCH may be interpreted as simultaneous reception of PDSCHs that are not of a certain QCL type (for example, QCL type D).

A plurality of PDSCHs (which may be referred to as multi PDSCH (multiple PDSCH)) from the multi TRP may be scheduled using one DCI (single DCI (S-DCI), single PDCCH) (single master mode). One DCI may be transmitted from one TRP of the multi TRP. A plurality of PDSCHs from the multi TRP may be respectively scheduled using a plurality of DCIs (multi DCI (M-DCI), multi PDCCH (multiple PDCCH)) (multi master mode). The plurality of DCIs may be respectively transmitted from the multi TRP. The UE may assume to transmit, to different TRPs, different CSI reports related to the respective TRPs. Such CSI feedback may be referred to as separate feedback, separate CSI feedback, and the like. In the present disclosure, "separate" may be interchangeably interpreted as "independent."

Note that the CSI feedback in which the CSI report related to both of the TRPs is transmitted to one TRP may be used. Such CSI feedback may be referred to as joint feedback, joint CSI feedback, and the like.

For example, in a case of the separate feedback, the UE is configured to transmit a CSI report for TRP #1 to TRP #1 by using a certain PUCCH (PUCCH1) and transmit a CSI report for TRP #2 to TRP #2 by using another PUCCH (PUCCH2). In a case of the joint feedback, the UE transmits the CSI report for TRP #1 and the CSI report for TRP #2 to TRP #1 or #2.

According to the multi TRP scenario as described above, more flexible transmission control using a channel having satisfactory quality can be performed.

(Codebook Configuration)

The UE is configured with a parameter (codebook configuration (CodebookConfig)) related to a codebook, using higher layer signaling (RRC signaling). The codebook configuration is included in the CSI report configuration (CSI-ReportConfig) being a higher layer (RRC) parameter.

In the codebook configuration, a codebook of at least one of a type 1 single panel (typeI-SinglePanel), a type 1 multi-panel (typeI-MultiPanel), a type 2 (typeII), and type 2 port selection (typeII-PortSelection) is selected.

In the parameters for the codebook, a parameter (... Restriction) related to codebook subset restriction (CBSR) is included. A configuration of CBSR is a bit indicating which PMI report is permitted ("1") and which PMI report is not permitted ("0") for a precoder associated with the bit of CBSR. 1 bit of a CBSR bitmap corresponds to one codebook index/antenna port.

(CSI Report Configuration)

In the CSI report configuration (CSI-ReportConfig) of Rel. 16, CSI-RS resources for channel measurement (resourcesForChannelMeasurement (CMR)), CSI-RS resources for interference measurement (csi-IM-ResourcesFor-Interference (ZP-IMR), nzp-CSI-RS-ResourcesForInterference (NZP-IMR)), and the like are included in addition to the codebook configuration (CodebookConfig). Of the parameters of CSI-ReportConfig, parameters except for codebook-Config-r16 are also included in the CSI report configuration of Rel. 15.

In Rel. 17, an enhanced CSI report configuration (CSI-ReportConfig) for CSI measurement/report of the multi TRP using NCJT has been under study. In the CSI report configuration, two CMR groups respectively corresponding to two TRPs are configured. The CMRs in the CMR group may be used for measurement of at least one of the multi TRP using NCJT and a single TRP. N CMR pairs of NCJT are configured by RRC signaling. The UE may be configured, by RRC signaling, as to whether to use the CMRs of the CMR pairs for single-TRP measurement.

Regarding the CSI report associated with NCJT measurement of the multi TRP/panel configured by a single CSI report configuration, supporting at least one of the following options 1 and 2 has been under study.

<Option 1>

The UE is configured to report X (X = 0, 1, 2) CSIs associated with single-TRP measurement hypotheses and one CSI associated with NCJT measurement. When X = 2, two CSIs are associated with two different single-TRP measurements using the CMRs of different CMR groups.

<Option 2>

The UE may be configured to report one CSI associated with the best measurement results among measurement hypotheses regarding NCJT and a single TRP.

As described above, in Rel. 15/16, CBSR is configured for each codebook configuration of each CSI report configuration. In other words, CBSR is applied to all of the CMRs and the like in corresponding CSI report configurations.

Note that, in the CSI report configuration for the multi TRP of Rel. 17 according to the CSI report configuration, when options 1 and 2 described above are applied, the following measurement configurations may be performed.

Option 1 (X = 0): Measurement of only the CSI of NCJT.
Option 1 (X = 1): Measurement of the CSI of NCJT and the CSI of a single TRP (one TRP).
Option 1 (X = 2): Measurement of the CSI of NCJT and the CSI of a single TRP (two TRPs).
Option 2: Measurement of both of the CSI of NCJT and the CSI of a single TRP.

(MIMO Antenna Model)

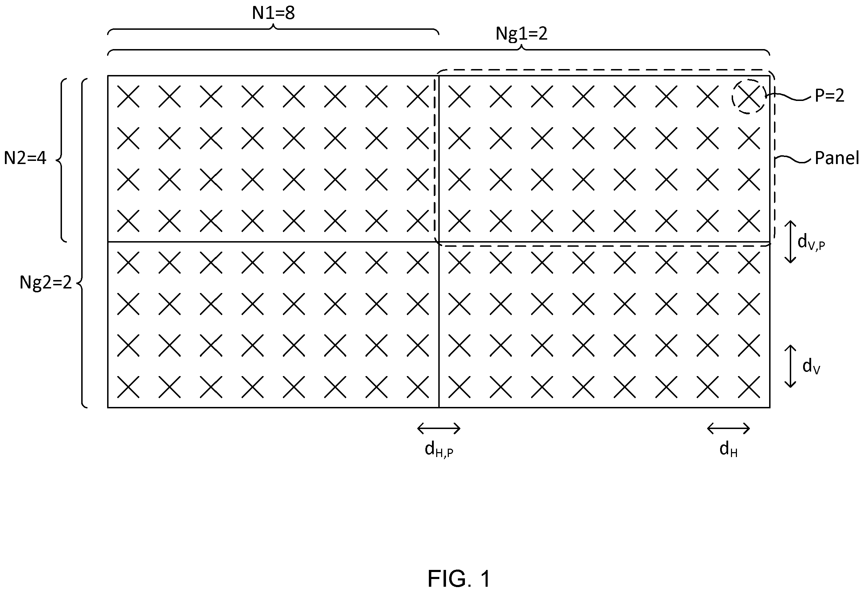

The antenna of the TRP/UE includes one or a plurality of panels. As shown in FIG. 1, a 2D antenna configuration is described using at least one of the following parameters.

- $N_1$ is the number of antenna elements of one panel in the horizontal direction.
- $N_2$ is the number of antenna elements of one panel in the vertical direction.
- $N_{g1}$ is the number of panels arrayed in the horizontal direction.
- $N_{g2}$ is the number of panels arrayed in the vertical direction.
- $d_H$ is an interval between two antenna elements being adjacent in the horizontal direction in one panel.
- $d_V$ is an interval between two antenna elements being adjacent in the vertical direction in one panel.
- $d_{H,P}$ is an interval between two antenna elements being adjacent in the horizontal direction between two panels being adjacent in the horizontal direction.
- $d_{V,P}$ is an interval between two antenna elements being adjacent in the vertical direction between two panels being adjacent in the vertical direction.
- P is the number of polarizations. When P = 2, for one position in a panel, two antenna elements respectively using different polarizations (for example, horizontal polarization and vertical polarization) are allocated.

$d_{H,P}$ ($d_{V,P}$) is typically equal to or larger than $d_H$ ($d_V$). The number $N_g$ of panels is equal to $N_{g1} * N_{g2}$.

The plurality of panels in the UE are directed in different directions. For example, two panels are directed in directions at angles of 0 and 180 degrees, respectively. For example, four panels are directed in directions at angles of 0, 90, 180, and 270 degrees, respectively.

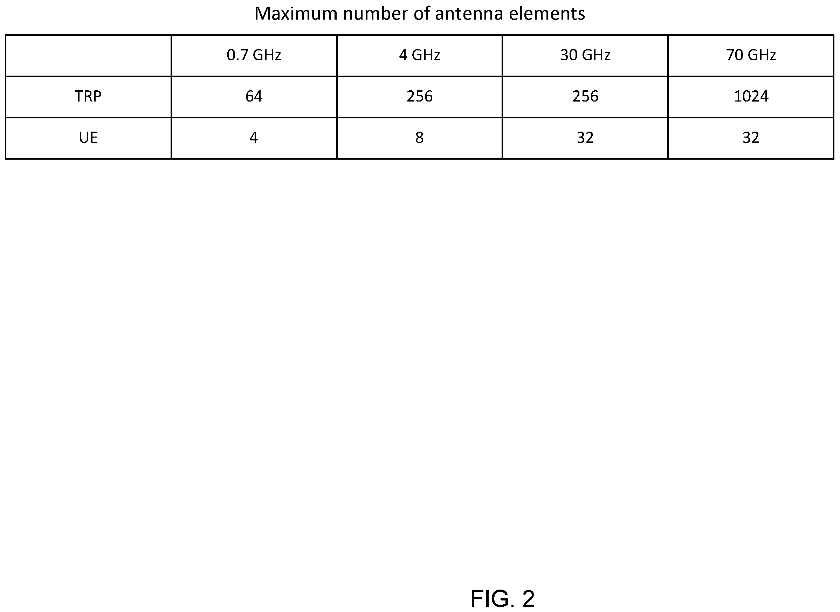

As shown in FIG. 2, for each frequency, a maximum number of antenna elements (AEs) of the TRP and a maximum number of antenna elements of the UE are defined.

(Type 1 Codebook)

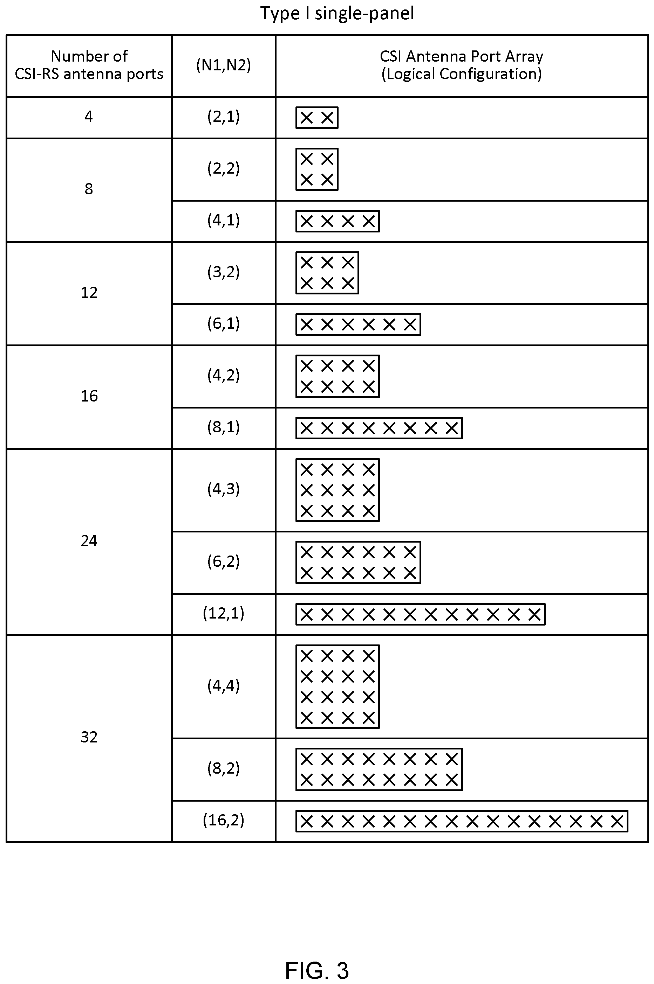

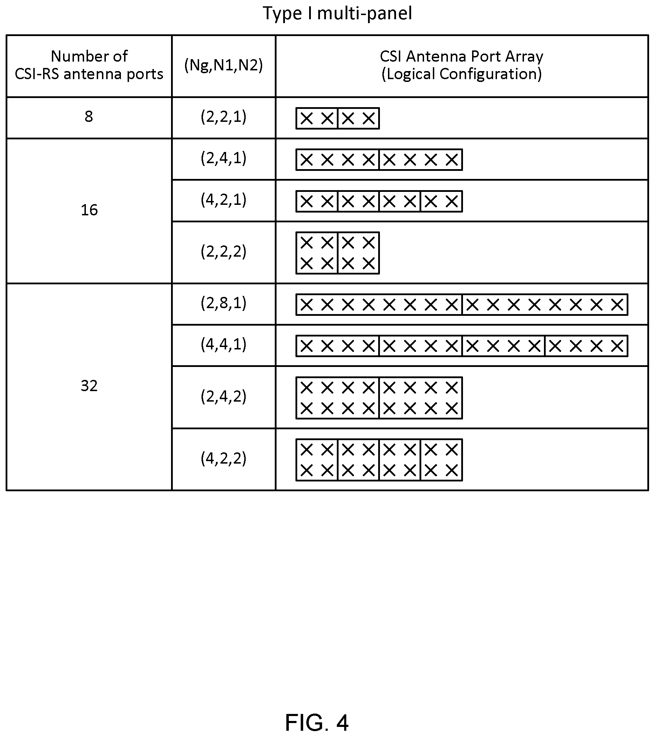

For a base station panel, the type 1 single-panel codebook and the type 1 multi-panel codebook are defined. In the type 1 single panel, for the number $P_{CSI-RS}$ of CSI-RS antenna ports and $(N_1, N_2)$, an antenna model of a CSI antenna port array (logical configuration) is defined (FIG. 3). In the type 1 multi-panel, for the number $P_{CSI-RS}$ of CSI-RS antenna ports and $(N_g, N_1, N_2)$, an antenna model of a CSI antenna port array (logical configuration) is defined (FIG. 4).

For Rel-15 type 1 single-panel CSI, for the UE, a higher layer parameter of a codebook type (subType in type1 in codebookType in CodebookConfig) is set to the type 1 single panel ('type1-SinglePanel'). When "number v of layers $\in \{2, 3, 4\}$" does not hold, the PMI values correspond to three codebook indices $i_{1,1}$, $i_{1,2}$, and $i_2$. When "number v of layers $\in \{2, 3, 4\}$" holds, the PMI values correspond to four codebook indices $i_{1,1}$, $i_{1,2}$, $i_{1,3}$, and $i_2$. When "number v of layers $\in \{2, 3, 4\}$" does not hold, this corresponds to a composite codebook index $i_1 = [i_{1,1}, i_{1,2}]$. When "number v of layers $\in \{2, 3, 4\}$" holds, this corresponds to a composite codebook index $i_1 = [i_{1,1}, i_{1,2}, i_{1,3}]$.

For the number $P_{CSI-RS}$ of CSI antenna ports, configurations (combinations of values) of supported $(N_1, N_2)$ and $(O_1, O_2)$ are defined in a specification. $(N_1, N_2)$ represents the number of two-dimensional antenna elements, and is configured by n1-n2 in moreThanTwo in nrOfAntennaPorts in type1-SinglePanel. $(O_1, O_2)$ is a two-dimensional over-sampling factor. $i_{1,1}$ corresponding to a horizontal beam is $\{0, 1, ..., N_1O_1 - 1\}$. $i_{1,2}$ corresponding to a vertical beam is $\{0, 1, ..., N_2O_2 - 1\}$. $i_2$ is $\{0, 1, 2, 3\}$. For a codebook mode (codebookMode) = 1, a matrix for a 1-layer CSI report codebook using antenna ports 3000 to 2999+$P_{CSI-RS}$ is $W\_i_{1,1}, i_{1,2}, i_2{}^{(1)}$. Here, $W_{l,m,n}{}^{(1)}$ is given by the following expression.

$$W^{(1)}_{l,m,n} = \frac{1}{\sqrt{P_{CSI-RS}}} \begin{bmatrix} v_{l,m} \\ \varphi_n v_{l,m} \end{bmatrix} \qquad (X1)$$

For Rel-15 type 1 multi-panel CSI, the number $N_g$ of panels is configured in addition to $N_1$ and $N_2$, in comparison to the type 1 single panel. As inter-panel co-phasing (inter-panel phase compensation, phase compensation between panels, inter-panel phase adjustment/phase difference), $i_{1,4}$ is added to be reported. The same SD beam (precoding matrix $W_1$) is selected for each panel, and only inter-panel co-phasing is added to be reported.

For the number $P_{CSI-RS}$ of CSI antenna ports, configurations (combinations of values) of supported $(N_g, N_1, N_2)$ and $(O_1, O_2)$ are defined in a specification. $(N_1, N_2)$ is configured by ng-n1-n2 in type1-MultiPanel. $i_{1,1}$ is $\{0, 1, ..., N_1O_1 - 1\}$. $i_{1,2}$ is $\{0, 1, ..., N_2O_2 - 1\}$. $i_{1,4,q}$ is $\{0, 1, 2, 3\}$ for $q = 1, ..., N_g - 1$. $i_2$ is $\{0, 1, 2, 3\}$. For a codebook mode (codebookMode) = 1, a matrix for a 1-layer CSI report codebook using antenna ports 3000 to 2999+$P_{CSI-RS}$ is $W\_i_{1,1}, i_{1,2}, i_{1,4}, i_2{}^{(1)}$. Here, $W_{l,m,p,n}{}^{(1)} = W_{l,m,p,n}{}^{1,N_g,1}$.

$W\_l,m,p,n^{1,N_g,1}$ and $W\_l,m,p,n^{2,N_g,1}$ for $N_g = \{2, 4\}$ (a matrix $W_{l,m,p,n}{}^{1,2,1}$ for a first layer, $N_g = 2$, and codeBookMode = 1, a matrix $W_{l,m,p,n}{}^{2,2,1}$ for a second layer, $N_g = 2$, and codebookMode = 1, a matrix $W_{l,m,p,n}{}^{1,4,1}$ for a first layer, $N_g = 4$, and codeBookMode = 1, and a matrix $W_{l,m,p,n}{}^{2,4,1}$ for a second layer, $N_g = 4$, and codeBookMode = 1) are given by the following expression.

$$W_{l,m,p,n}^{1,2,1} = \frac{1}{\sqrt{P_{\text{CSI-RS}}}} \begin{bmatrix} v_{l,m} \\ \varphi_n v_{l,m} \\ \varphi_{p_1} v_{l,m} \\ \varphi_n \varphi_{p_1} v_{l,m} \end{bmatrix} \qquad W_{l,m,p,n}^{2,2,1} = \frac{1}{\sqrt{P_{\text{CSI-RS}}}} \begin{bmatrix} v_{l,m} \\ -\varphi_n v_{l,m} \\ \varphi_{p_1} v_{l,m} \\ -\varphi_n \varphi_{p_1} v_{l,m} \end{bmatrix}$$

$$W_{l,m,p,n}^{1,4,1} = \frac{1}{\sqrt{P_{\text{CSI-RS}}}} \begin{bmatrix} v_{l,m} \\ \varphi_n v_{l,m} \\ \varphi_{p_1} v_{l,m} \\ \varphi_n \varphi_{p_1} v_{l,m} \\ \varphi_{p_2} v_{l,m} \\ \varphi_n \varphi_{p_2} v_{l,m} \\ \varphi_{p_3} v_{l,m} \\ \varphi_n \varphi_{p_3} v_{l,m} \end{bmatrix} \qquad W_{l,m,p,n}^{2,4,1} = \frac{1}{\sqrt{P_{\text{CSI-RS}}}} \begin{bmatrix} v_{l,m} \\ -\varphi_n v_{l,m} \\ \varphi_{p_1} v_{l,m} \\ -\varphi_n \varphi_{p_1} v_{l,m} \\ \varphi_{p_2} v_{l,m} \\ -\varphi_n \varphi_{p_2} v_{l,m} \\ \varphi_{p_3} v_{l,m} \\ -\varphi_n \varphi_{p_3} v_{l,m} \end{bmatrix}$$

(X2)

Here, $\varphi_n = e^{j\pi n/2}$. $p = p_1$ for $N_g = 2$, and $p = [p_1, p_2, p3]$ for $N_g = 4$. $\varphi\_p_1$, $\varphi\_p_2$, and $\varphi\_p_3$ represent inter-panel co-phasing. The same beam (SD beam matrix, precoding matrix $W_1$) is selected for panels 0, 1, 2, and 3, $\varphi\_p_1$ represents phase compensation of panel 1 with respect to panel 0, $\varphi\_p_2$ represents phase compensation of panel 2 with respect to panel 0, and $\varphi\_p_3$ represents phase compensation of panel 3 with respect to panel 0.

(Type 2 Codebook)

On an assumption of an ideal backhaul, synchronization, and the same number of antenna ports across a plurality of TRPs, CSI acquisition for coherent joint transmission (CJT) for FR1 and up to four TRPs has been under study. For a CJT multi TRP for FDD, enhancement of a Rel-16/17 type 2 codebook has been under study.

In the present disclosure, a matrix Z including X rows and Y columns may be represented by $Z(X \times Y)$.

Regarding a Rel-15 type 2 CSI, for a given layer k, generation of an (SB-wise) precoding vector for each subband is based on the following expression.

$$W_k(N_t \times N_3) = W_1 W_{2,k} \qquad (Y1)$$

Nt is the number of ports. $N_3$ is a total number of precoding matrices (precoders) (the number of subbands) indicated by the PMIs. $W_1(N_t \times 2L)$ is a matrix (SD beam matrix) including $L \in \{2, 4\}$ (over-sampled) spatial domain (SD) two-dimensional (2D) DFT vectors (SD beams, 2D-DFT vectors). L is the number of beams. For example, L (= 2) SD 2D-DFT vectors are $b_i$ and $b_j$, respectively. $W_{2,k}(2L \times N_3)$ is a subband complex linear combination (LC) coefficients (combination coefficients) matrix for the layer k. $W_{2,k}$ represents beam selection and co-phasing between two polarizations. For example, two $W_{2,k}$ are $c_i$ and $c_j$, respectively. For example, a channel matrix h is approximated by a linear combination $c_i b_i$, $+c_j b_j$ of L (= 2) SD 2D-DFT vectors. Overhead of feedback is mainly due to the LC coefficient matrix $W_{2,k}$. The Rel-15 type 2 CSI supports only ranks 1 and 2.

Rel-16 type 2 CSI reduces overhead associated with $W_{2,k}$ by means of frequency domain (FD) compression. The Rel-16 type 2 CSI supports ranks 3 and 4 in addition to ranks 1 and 2.

Regarding the Rel-16 type 2 CSI, for a given layer k, information based on the following expression may be reported by the UE.

$$W_k = W_1 \tilde{W}_k W_{f,k}^H \qquad (Y2)$$

$W_{2,k}$ is approximated by $\tilde{W}_k W_{f,k}^H$. The matrix $\tilde{W}$ may be represented with $\sim$ being placed over W (w tilde). The matrix $W_{f,k}^H$ is the conjugate transpose of $W_{f,k}$.

For the CSI report, the UE may be configured with one of two subband sizes. The subband (CQI subband) may be defined as $N_{PRB}^{SB}$ consecutive PRBs and be dependent upon the total number of PRBs in the BWP. The number R of PMI subbands per CQI subband is configured by an RRC IE (numberOfPMI-SubbandsPerCQI-Subband). R is used to control the total number $N_3$ of precoding matrices indicated by the PMIs as a function of the number of subbands configured in csi-ReportingBand, the subband size configured by subbandSize, and the total number of PRBs in the BWP.

$W_1(N_t \times 2L)$ is a matrix including a plurality of (over-sampled) spatial domain (SD) 2D-DFT (vectors, beams). For the matrix, a plurality of indices of the two-dimensional discrete Fourier transform (2D-DFT) vectors and the two-dimensional over-sampling factor are reported. The spatial-domain response/distribution represented by the SD 2D-DFT vectors may be referred to as SD beams.

$\tilde{W}_k(2L \times M_v)$ is a matrix including combination coefficients (subband complex linear combination (LC) coefficients). For the matrix, up to $K_0$ non-zero coefficients (NZCs) are reported. The report includes two parts, namely a bitmap for capturing NZC positions and quantized NZCs.

$W_{f,k}(N_3 \times M_v)$ is a matrix including a plurality of frequency domain (FD) bases (vectors) for the layer k. $M_v$ FD bases (FD DFT bases) are present for each layer. When $N_3 > 19$, $M_v$ DFT from an intermediate subset (InS) having a size $N_3'$ ($< N_3$) are selected. When $N_3 \leq 19$, log2($C(N_3 - 1, M_v - 1)$) bits are reported. Here, $C(N_3 - 1, M_v - 1)$ is the number of combinations for selecting $M_v - 1$ out of $N_3 - 1$, and is also referred to as binomial coefficients. The frequency-domain response/distribution (frequency response) represented by a linear combination of the FD basis vectors and the combination coefficients may be referred to as FD beams. The FD beam may correspond to a delay profile (time response).

A subset of FD bases is given as $\{f_1, ..., f_{Mv}\}$. Here, $f_i$ is an i-th FD basis for a k-th layer, where $i \in \{1, ..., M_v\}$. A PMI subband size is given by "CQI subband size/R", where $R \in \{1, 2\}$. The number $M_v$ of FD bases for a given rank v is given by ceil ($p_v \times N_3/R$). The number of FD bases is the same for all of the layers k, where layer $k \in \{1, 2, 3, 4\}$. $p_v$ is configured by a higher layer.

Each row of the matrix $W_{2,k}$ represents a channel frequency response of a specific SD beam. When the SD beam has high directivity, a channel tap for each beam is limited (a power delay profile is sparse in the time domain). As a result, the channel frequency response for each SD beam has a high correlation (is flatter in the frequency domain). In this case, the channel frequency response can be approximated by a linear combination of a small number of FD bases. For example, when $M_v = 2$, the frequency response associated with an SD beam $b_0$ is approximated by $d_1^0 f_2 +, d_2^0 f_q$, using the FD bases $f_2$ and $f_q$ and the linear combination coefficients $d_1^0$ and $d_2^0$.

$M_v$ FD bases with the highest gain are selected. By applying $M_v \ll N_3$, overhead of $\tilde{W}_k$ is considerably smaller than overhead of $W_{2,k}$. All or a part of the $M_v$ FD bases are used for approximation of the frequency response of each SD beam. A bitmap is used to report only the FD bases selected for each SD beam. If the bitmap is not reported, all of the FD bases are selected for each SD beam. In this case, nonzero coefficients (NZCs) of all of the FD bases are reported for each SD beam. $K_k^{NZ} \leq K_0 = \text{ceil}(\beta \times 2LM_v)$, where $K_k^{NZ}$ is a maximum number of NZCs in one layer, and $K^{NZ} \leq 2K_0 = \text{ceil}(\beta \times 2LM_v)$, where $K^{NZ}$ is a maximum number of NZCs across all of the layers. $\beta$ is configured by a higher layer.

Complex coefficients to be reported in $\tilde{W}_k$ are separately quantized amplitude and phase.

[Amplitude Quantization]

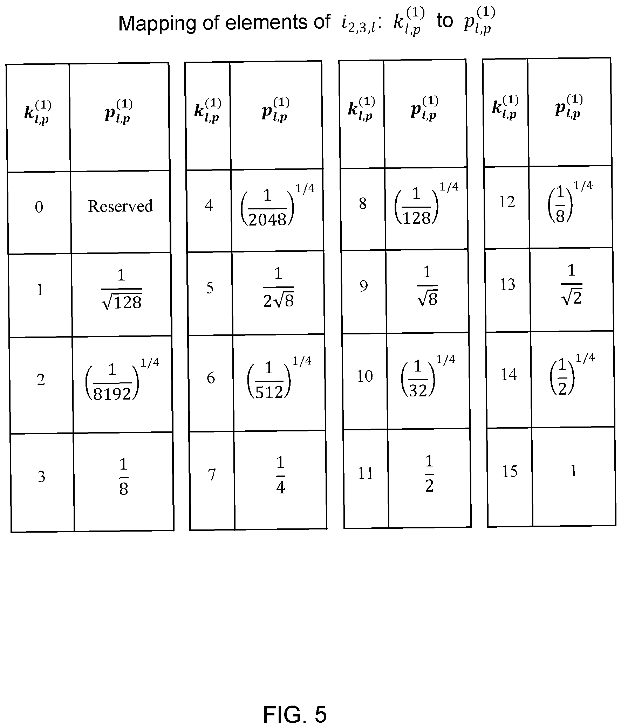

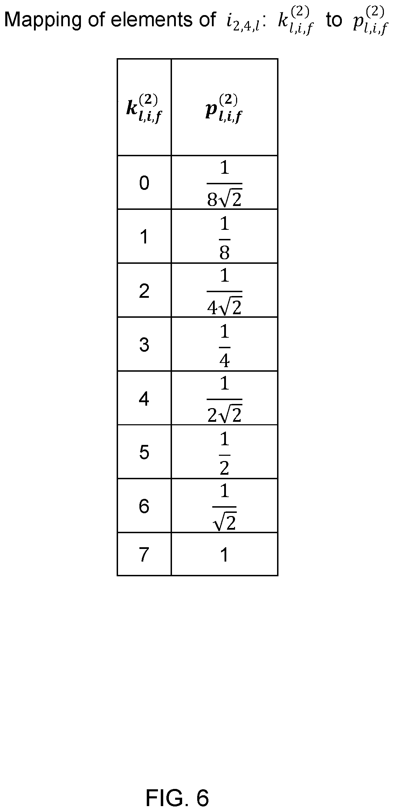

Polarization-specific reference amplitude is subjected to 16-level quantization using the table of FIG. 5. All of the other coefficients are subjected to 8-level quantization using the table of FIG. 6.

[Phase Quantization]

All of the coefficients are quantized using 16-PSK. For example, $\varphi_{l,i} = \exp(j2\pi c_{l,i}/16)$, and $c_{l,i} \in \{0, ..., 15\}$. Here, $c_{l,i}$ is a phase coefficient to be reported by the UE (using 4 bits) for an associated phase value $\varphi_{l,i}$.

Type 2 CSI feedback on the PUSCH of Rel. 16 includes two parts. The CSI part 1 has a fixed payload size, and is used to identify the number of information bits in the CSI part 2. The size of the part 2 is variable (the UCI size is dependent upon the number of non-zero amplitude coefficients (NZCs), and the number is not known to the base station). The UE reports the number of NZCs in the CSI part 1, and the number determines the size of the CSI part 2. After receiving the CSI part 1, the base station recognizes the size of the CSI part 2.

In enhanced type 2 CSI feedback, the CSI part 1 includes an RI, a CQI, and an indication of a total number of non-zero amplitudes across a plurality of layers for enhanced type 2 CSI. Fields of the part 1 are separately coded. The CSI part 2 includes a PMI of enhanced type 2 CSI. The parts 1 and 2 are separately coded. The CSI part 2 (PMI) includes at least one of an over-sampling factor, indices of 2D-DFT bases, an index $M_{initial}$ of an initial DFT basis (start offset) of a selected DFT window, DFT bases selected for each layer, non-zero LC coefficients (NZCs, amplitude and phase) of each layer, a strongest (of the highest strength) coefficient indicator (strongest coefficeint indicator (SCI)) of each layer, and amplitude of the strongest coefficient of each layer/each polarization.

A plurality of PMI indices (PMI values, codebook indices) associated with different pieces of CSI part 2 information may conform to the following for the k-th layer.

- $i_{1,1}$: Over-sampling factor
- $i_{1,2}$: Plurality of indices of 2D-DFT bases
- $i_{1,5}$: Index (start offset) $M_{initial}$ of an initial DFT basis of a selected DFT window
- $i_{1,6,k}$: DFT bases selected for the k-th layer
- $i_{1,7,k}$: Bitmap for the k-th layer
- $i_{1,8,k}$: Strongest (of the highest strength) coefficient indicator (SCI) for the k-th layer
- $i_{2,3,k}$: Amplitude of the strongest coefficient of the k-th layer (for both polarizations)
- $i_{2,4,k}$: Amplitude of reported coefficients of the k-th layer
- $i_{2,5,k}$: Phase of reported coefficients of the k-th layer

$i_{1,5}$ and $i_{1,6,k}$ are PMI indices for DFT basis report. Only when $N_3 > 19$, $i_{1,5}$ is reported.

As grouping of the CSI part 2, PMI information is grouped into three groups (groups 0 to 2) for a given CSI report. This is important when CSI omission is performed. Each reported element of the indices $i_{2,4,l}$, $i_{2,5,l}$, and $i_{1,7,l}$ is associated with a specific priority rule. Groups 0 to 2 conform to the following.

- Group 0: Indices $i_{1,1}$, $i_{1,2}$, and $i_{1,8,l}$ (l = 1, ..., v)
- Group 1: {$v2LM_v$ - floor ($K^{NZ}/2$)} highest (top) priority elements out of the index $i_{1,5}$ (if reported) and the indices $i_{1,6,l}$ and $i_{1,7,l}$ (if reported), {ceil($K^{NZ}/2$)- v} highest (top) priority elements out of $i_{2,3,l}$ and $i_{2,4,l}$, and {ceil($K^{NZ}/2$)- v} highest (top) priority elements out of $i_{2,5,l}$ (l = 1, ..., v)
- Group 2: floor($K^{NZ}/2$) lowest (bottom) priority elements out of $i_{1,7,l}$, floor ($K^{NZ}/2$) lowest (bottom) priority elements out of $i_{2,4,l}$, and floor ($K^{NZ}/2$) lowest (bottom) priority elements out of $i_{2,5,l}$ (l = 1, ..., v)

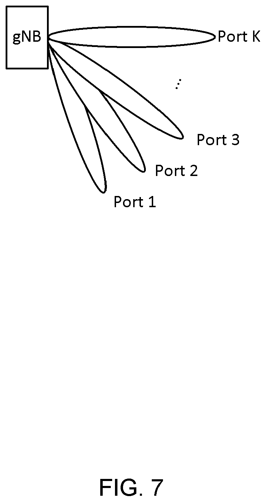

In Rel-16 type 2 port selection (PS) CSI, a type 2 PS codebook (CB) does not require the UE to derive the SD beams in consideration of 2D-DFT in a regular type 2 CB. Instead, the base station transmits the CSI-RS, using K CSI-RS ports beamformed in consideration of a set of SD beams (FIG. 7). The UE identifies the best L ($\leq$ K) CSI-RS ports, and reports indices thereof in $W_1$.

In the type 1 CSI, the SD beams represented by the SD DFT vectors are transmitted to the UE. In the type 2 CSI, L SD beams are linearly combined and transmitted to the UE. Each SD beam can be associated with a plurality of FD beams. For corresponding SD beams, the channel frequency response can be obtained using a linear combination of the FD basis vectors thereof. The channel frequency response corresponds to a power delay profile.

For layer k $\in$ {1, 2, 3, 4}, a (subband (SB)-wise) precoder generation for each subband is given by the following expression.

$$W_k (N_t \times N_3) = Q W_1 \tilde{W}_k W_{f,k}^H \quad (Y3)$$

Here, Q ($N_t \times K$) indicates K SD beams used for CSI-RS beamforming. $W_1$($K \times 2L$) is a block diagonal matrix. $\tilde{W}_k$ ($2L \times M$) is an LC coefficient matrix. $W_{f,k}$($N_3 \times M$) includes $N_3$ DFT basis vectors (FD basis vectors). K is configured by a higher layer. L is configured by a higher layer. $P_{CSI-RS} \in$ {4, 8, 12, 16, 24, 32}. When $P_{CSI-RS} > 4$, L $\in$ {2, 3, 4}.

(Rel-17 Type 2 Port Selection Codebook)

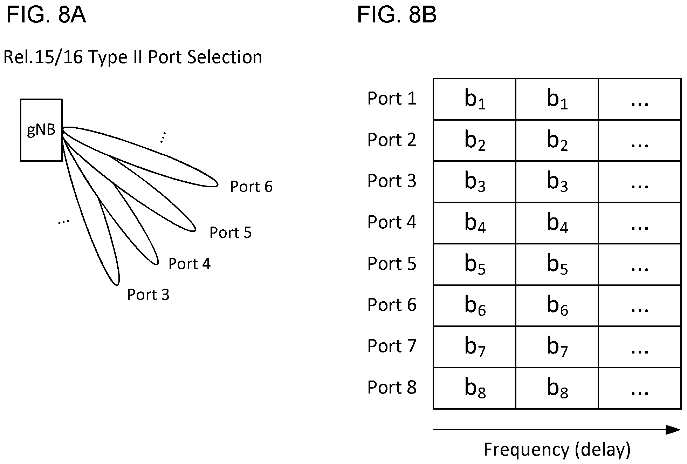

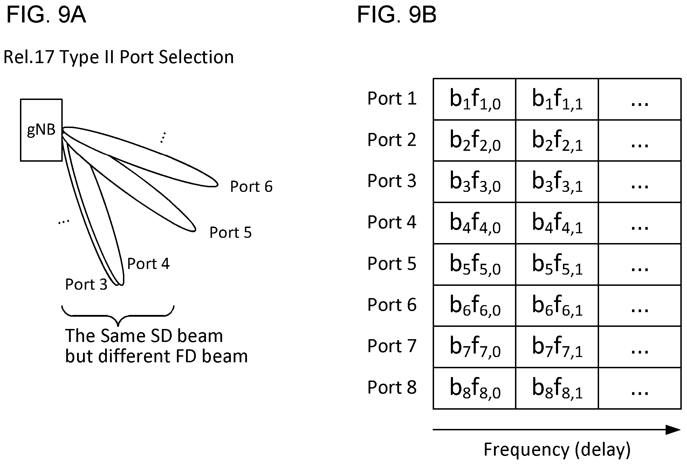

In a Rel-15/16 type 2 port selection (PS) CSI/codebook, each CSI-RS port #i is associated with an SD beam ($b_i$) (FIGS. 8A and 8B). In a Rel-17 type 2 port selection CSI/codebook (enhanced type 2 port selection codebook), instead of an SD beam, each CSI-RS port #i is associated with an SD-FD beam pair (a pair of an SD beam $b_i$ and an FD beam $f_{i,j}$ (j is a frequency index)) (FIGS. 9A and 9B). In the present example, ports 3 and 4 are associated with the same SD beam but associated with different FD beams.

Frequency selectivity of the channel frequency response observed in the UE based on the pair of the SD beam and the FD beam can be further reduced than frequency selectivity of the channel frequency response observed in the UE based on the SD beam owing to delay pre-compensation.

The main scenario of the Rel-17 type 2 port selection codebook is FDD. Although channel reciprocity based on SRS measurement is not perfect, the base station can obtain some pieces of partial information. By using SRS measurement in the base station in addition to the CSI report, the base station can obtain CSI for determination of a DL MIMO precoder. In this case, some CSI reports may be omitted in order to reduce CSI overhead.

In the Rel-17 type 2 PS CSI, each CSI-RS port is beamformed using the SD beams and the FD basis vectors. Each port is associated with an SD-FD pair.

For a given layer k, information based on the following expression may be reported by the UE.

$$W_k(K \times N_3) \; = \; W_1 W^\sim_k W_{f,k}{}^H \qquad (Y4)$$

For $W_1(K \times 2L)$, each matrix block includes L columns of $K \times K$ identity matrices. The base station transmits K beamformed CSI-RS ports. Each port is associated with an SD-FD pair. The UE selects L out of K ports, and reports the K ports to the base station as a part of the PMIs ($W_{1,k}$). In Rel. 16, each port is associated with an SD beam.

$W^\sim_k(2L \times M_v)$ is a matrix including combination coefficients (subband complex LC coefficients). Up to $K_0$ NZCs are reported. The report includes two parts, namely a bitmap for capturing NZC positions and quantized NZCs. In a specific case, the bitmap can be omitted. In Rel. 16, the bitmap of the NZC positions is invariably reported.

$W_{f,k}(N_3 \times M_v)$ is a matrix including $N_3$ FD basis (FD DFT basis) vectors. $M_v$ FD bases are present for each layer. The base station may remove $W_{f,k}$. When $W_{f,k}$ is on, $M_v$ additional FD bases are reported. When $W_{f,k}$ is off, no additional FD bases are reported. In Rel. 16, $W_{f,k}$ is invariably reported.

For Rel-17 NCJT CSI, two CMR groups with $K_s$ (= K1 + K2) CMRs are configured for the UE. K1 and K2 are each the number of CMRs in two CMR groups. By being selected out of all available pairs, N CMR pairs are configured by a higher layer. N = 1 and $K_s$ = 2 are supported. $N_{max}$ = 2 is an optional feature of the UE. $K_{s,max}$ = 2 is an optional feature of the UE.

The UE may support at least one of the following two options.

[Option 1]

The UE may be configured to report X CSIs associated with single-TRP measurement hypotheses and one CSI associated with NCJT measurement hypotheses. X = 0, 1, 2 may hold. When X = 2, two CSIs are associated with different single-TRP measurement hypotheses using a plurality of CMRs from different CMR groups. Supporting X = 1, 2 is an optional feature for option 1.

[Option 2]

The UE may be configured to report one CSI associated with the best one out of the NCJT measurement hypotheses and the single-TRP measurement hypotheses.

(JT)

Joint transmission (JT) may mean simultaneous data transmission from a plurality of points (for example, TRPs) to a single UE.

Rel. 17 supports NCJT from two TRPs. The PDSCH from two TRPs may be independently precoded and independently decoded. The frequency resources may not overlap (non-overlapping), may partially overlap (partial-overlapping), or may fully overlap (full-overlapping). When overlapping occurs, the PDSCH from one TRP interferes with the PDSCH from another TRP.

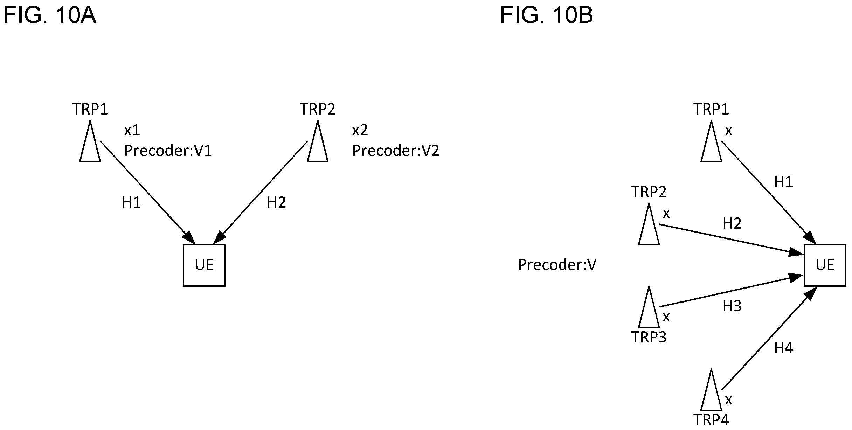

FIG. 10A shows an example of NCJT from two TRPs. A signal $x_1$ from a first TRP is precoded using a precoding matrix $V_1$ to be transmitted, is affected by a channel matrix $H_1$, and is received as a signal $y_1$. A signal $x_2$ from a second TRP is precoded using a precoding matrix $V_2$ to be transmitted, is affected by a channel $H_2$, and is received as a signal $y_2$. A layer i may be from one TRP. Here, $H_1 = U_1 \Sigma V_1{}^H$, $H_2 = U_2 \Sigma V_2{}^H$, $y_1 = H_1 V_1 x_1$, and $y_2 = H_2 V_2 x_2$ may hold.

In Rel. 18, supporting CJT using up to four TRPs has been under study. Data from four TRPs may be coherently precoded and transmitted to the UE in the same time-frequency resources. For example, the same precoding matrix may be used in consideration of channels from four TRPs. "Coherent" may mean that phases of a plurality of received signals have a certain relationship. With use of 4-TRP joint precoding, signal quality may be improved, and interference between four TRPs may be absent. Data may be subject only to interference outside of four TRPs.

FIG. 10B shows an example of CJT from four TRPs. Signals from the first to fourth TRPs are precoded using a precoding matrix V to be transmitted. Signals x from the first to fourth TRPs are affected by channel matrices $H_1$, $H_2$, $H_3$, and $H_4$, and are received as signals y. A layer i may be from four TRPs. Here, $H = H_1 + H_2 + H_3 + H_4 = U \Sigma V^H$ and y = HVx may hold.

In an ideal case (where four TRPs are co-located (can be regarded as the same position)), joint estimation of aggregated channel matrices H can be performed, and the joint precoding matrix V can be fed back. However, large-scale path losses with four paths may be greatly different. The joint precoding matrix V based on a constant module codebook is not accurate. In this case, feedback for each TRP and inter-TRP coefficients can be aligned using the current-NR type 2 codebook.

For CJT of up to four TRPs in FR1, selection of four TRPs may be semi-static. Thus, the selection and a configuration of four CMRs (four CSI-RS resources) for channel measurement may also be semi-static. A dynamic indication of four TRPs from a list of CSI-RS resources is also possible, but the possibility is low.

Path losses from four TRPs to the UE are different. Thus, it is difficult to be attained by only reporting one aggregated CSI representing a joint channel matrix.

In consideration of fallback operation to NCJT (that is, a single TRP), CSI for each TRP (that is, single-TRP CSI as in Rel-17 NCJT CSI) is also important.

The following contents have been under study.

- CMR and IMR for measurement of up to four TRPs.
- CSI for each TRP with inter-TRP CSI feedback for X-TRP CJT (CJT using X TRPs).
- Inter-TRP CSI: A new feedback and codebook for an inter-TRP phase matrix/inter-TRP amplitude matrix/inter-TRP matrix (including both amplitude and phase).
- A fact that X-TRP CJT CQI can be added and reported.
- Restriction on CSI for each TRP.
- Details of inter-TRP CSI/PMI (for example, phase between the TRPs, or phase and amplitude between the TRPs).

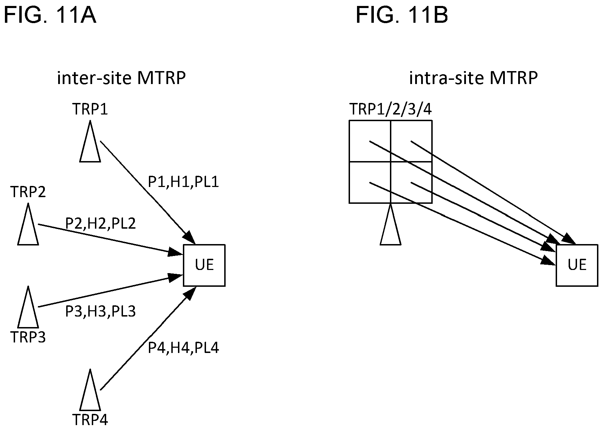

For an inter-site multi TRP, CSI feedback for each TRP has been under study. As shown in the example of FIG. 11A, in the inter-site multi TRP (TRP1/TRP2/TRP3/TRP4), received powers (P1/P2/P3/P4)/channel matrices (H1/H2/H3/H4)/path losses (PL1/PL2/PL3/PL4) from different TRPs are different. However, as shown in the example of FIG. 11B, for an intra-site multi TRP (for example, up to X panels (for example, X = 4, TRP1/TRP2/TRP3/TRP4) at the same position), received powers/channel matrices/path losses from the four TRPs (panels) may be the same, and thus CSI feedback for each TRP is unnecessary. For intra-site multi TRP CJT CSI, the principles of the type 1 multi-panel codebook can be taken into consideration. Unless operation related to the intra-site multi TRP CJT CSI is clarified, this may cause reduction in throughput or the like.

In view of this, the inventors of the present invention came up with the idea of operation related to the CJT CSI using a multi TRP/multi-panel.

Embodiments according to the present disclosure will be described in detail with reference to the drawings as follows. Note that the embodiments (for example, the cases) described below may each be used individually, or at least two of them may be applied in combination.

In the present disclosure, "A/B" and "at least one of A and B" may be interchangeably interpreted. In the present disclosure, "A/B/C" may mean "at least one of A, B, and C".

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, time domain resource allocation and time domain resource assignment may be interchangeably interpreted.

In the present disclosure, a beam, an SD beam, an SD vector, and an SD 2D-DFT vector may be interchangeably interpreted. L, the number of SD beams, the number of beams, and the number of SD 2D-DFT vectors may be interchangeably interpreted.

In the present disclosure, an FD basis, an FD DFT basis, a DFT basis, and $f_i$ may be interchangeably interpreted. In the present disclosure, an FD beam, an FD vector, an FD basis vector, an FD DFT basis vector, and a DFT basis vector may be interchangeably interpreted.

In the present disclosure, a combination coefficient, an LC coefficient, a subband complex LC coefficient, and a combination coefficient matrix may be interchangeably interpreted.

In the present disclosure, a panel, a base station (gNB) panel, and a TRP may be interchangeably interpreted.

In the present disclosure, co-phasing, phasing, phase compensation, phase adjustment, phase difference, and phase relation may be interchangeably interpreted.

(Radio Communication Method)

In each embodiment, at least one of a Rel-16 type 2 CSI report, a Rel-16 type 2 port selection CSI report, and a Rel-17 type 2 port selection CSI report described above may be regarded as single-TRP CSI or single-panel CSI.

In each embodiment, X TRPs, an X-TRP, X panels, and Ng panels may be interchangeably interpreted. In each embodiment, CJT using X TRPs, CJT using X panels, and X-TRP CJT may be interchangeably interpreted.

In each embodiment, reference CSI, CSI for a reference TRP, and first reported CSI may be interchangeably interpreted. In each embodiment, a reference TRP, CSI corresponding to reference CSI, a TRP corresponding to first reported CSI, and CSI-RS resources/CMR/CMR group/CSI-RS resource set corresponding to first reported CSI may be interchangeably interpreted. In each embodiment, a TRP, CSI-RS resources, a CMR, a CMR group, and a CSI-RS resource set may be interchangeably interpreted.

In each embodiment, a multi TRP, a multi-panel, an intra-site multi TRP, and an inter-site multi TRP may be interchangeably interpreted.

In each embodiment, an inter-TRP, an inter-panel, an inter-TRP difference, and inter-TRP comparison may be interchangeably interpreted.

In each embodiment, inter-TRP CSI, inter-TRP CJT CSI, inter-panel CSI, CSI of another TRP for CSI of a reference TRP, and CSI of another TRP for CSI of a reference panel may be interchangeably interpreted. In each embodiment, per-TRP CSI and per-panel CSI may be interchangeably interpreted.

In each embodiment, an inter-TRP phase index and an inter-TRP phasing index may be interchangeably interpreted. In each embodiment, an inter-TRP index and an inter-TRP coefficient index may be interchangeably interpreted. In each embodiment, an inter-TRP phase matrix and an inter-TRP phasing matrix may be interchangeably interpreted. In each embodiment, an inter-TRP matrix and an inter-TRP coefficient matrix may be interchangeably interpreted. In each embodiment, an inter-TRP phase codebook and an inter-TRP phasing codebook may be interchangeably interpreted. In each embodiment, an inter-TRP codebook and an inter-TRP coefficient codebook may be interchangeably interpreted.

In each embodiment, target resources, a CMR, CSI-RS resources, NZP-CSI-RS resources, a CMR group, a CSI-RS resource set, an NZP-CSI-RS resource set, and a TRP may be interchangeably interpreted.

In each embodiment, an inter-TRP codebook, a multi-panel codebook for the type 2 codebook, and an inter-panel codebook may be interchangeably interpreted.

In each embodiment, an FD basis vector size, the number of FD bases, an $M_v$ size, $M_v$, and $M_{v,i}$ may be interchangeably interpreted.

In each embodiment, a layer k and a layer l may be interchangeably interpreted.

In each embodiment, CSI report/contents may be applied to a subband report, or may be applied to a wideband report.

((Embodiment #A))

<Embodiment #A1>

The present embodiment relates to the CMR.

When a new parameter indicating a codebook type is configured (for example, codebookType = TypeII-CJT-r18 or TypeII-PortSelection-CJT-r18), new CJT CSI feedback based on existing type 2/type 2 port selection may be configured. A new UE capability for each new codebook type for CJT may be defined.

A configuration/indication of the CMR may conform to one of the following options 1-1 to 1-3.

<<Option 1-1>>

The number of TRPs (number of CJT CSIs) may be explicitly configured as X, or may be implicitly indicated via the number of target resources (CMR (CSI-RS resources)/CMR groups/CSI-RS resource sets) in the CSI report configuration (CSI-ReportConfig). A new UE capability for X may be defined. For example, X is an integer, and may be up to 4, may be 2, 3, or 4, or may be greater than 4.

In CSI-ReportConfig for CJT CSI feedback, up to X target resources (CMR (CSI-RS resources)/CMR groups/CSI-RS resource sets) may be configured for a first resource setting for channel measurement. Each target resource (CMR (CSI-RS resource)/CMR group/CSI-RS resource set) may correspond to one TRP.

It is preferable that X CSI-RS resources be used. For X CMR groups/CSI-RS resource sets, an additional bitmap for indicating a combination of CMRs from the X CMR groups/CSI-RS resource sets is required.

One CMR from X CMRs may be measured and reported by the UE as reference CSI. For example, first CRI/CSI in mapping order may be regarded as the reference CSI. Other CMRs may be measured in consideration of an inter-TRP difference based on the reference

CSI.

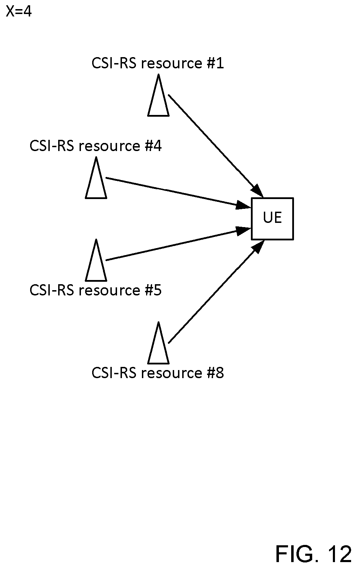

In the example of FIG. 12, X = 4. For four TRPs, four CMRs (CSI-RS resources #1, #4, #5, and #8) are respectively configured.

[Variations]

In order to take selection of different X-TRPs (X TRPs) into consideration, up to N*X CMRs may be configured. Here, the X CMRs may respectively correspond to X TRPs for CJT CSI. N combinations of the X-TRP may be measured and selected by the UE for the CJT CSI. A new UE capability for N may be defined. For example, N may be 1 or 2.

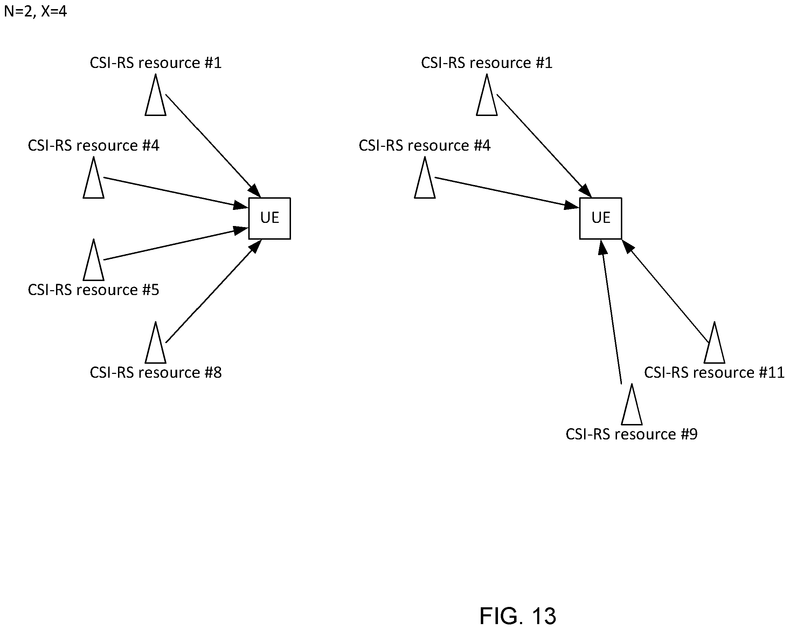

In the example of FIG. 13, N = 2 and X = 4. A combination of four CMRs (CSI-RS resources #1, #4, #5, and #8) and another combination of four CMRs (CSI-RS resources #1, #4, #9, and #11) are configured.

<<Option 1-2>>

For the CJT CSI, up to X CSI report configurations (CSI-ReportConfig) may be configured and associated. Here, each CSI-ReportConfig may correspond to one TRP. For each CSI-ReportConfig, up to N CMRs may be configured. For example, N may be 1, or may be 2 or greater.

The configuration/indication of the CMR may conform to one of the following options 1-2-1 and 1-2-2.

[Option 1-2-1]

One of X CSI-ReportConfigs may be configured as reference CSI-ReportConfig, and X-1 other CSI-ReportConfigs may be associated with the reference CSI-ReportConfig.

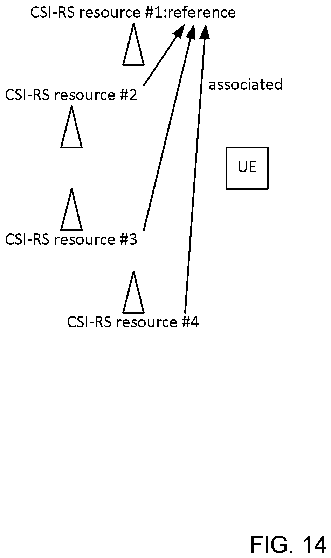

In the example of FIG. 14, four CSI-ReportConfigs (#1, #2, #3, and #4) are respectively configured for four TRPs. CSI-ReportConfig #1 is configured as the reference CSI-ReportConfig, and CSI-ReportConfigs #2, #3, and #4 are associated with CSI-ReportConfig #1.

[Option 1-2-2]

One CMR from one CSI-ReportConfig from X CSI-ReportConfigs may be selected, and CSI based thereon may be reported as the reference CSI. Other CMRs from other CSI-ReportConfigs may be measured in consideration of an inter-TRP difference based on the reference CSI. Only one CMR can be configured for the CJT CSI in each CSI-ReportConfig, and a 1-bit indicator of the reference CSI may be reported for each CSI-ReportConfig. The 1-bit indicator may indicate whether or not corresponding CSI is the reference CSI.

In option 1-1 described above, one CSI-ReportConfig may be associated with a plurality of TRPs. One CSI-RS (CSI-RS resource/CMR) may be associated with one TRP. In option 1-2 described above, one CSI-ReportConfig may be associated with one TRP.

<<Option 1-3>>

In the CSI report configuration (CSI-ReportConfig) for CJT CSI feedback, one or more N-port CSI-RS resources may be configured for CJT CSI measurement. Here, one or more ports from N ports may correspond to one TRP. A part of the N ports may correspond to one TRP, and other ports may correspond to another TRP. $N \geq X$ may hold.

For example, if one N-port CSI-RS resource is configured, the UE may measure all of the N ports, and report one CSI. For example, the UE may assume that each port is to be transmitted by a plurality of TRPs, and measure all of the N ports. In this case, enhancement of the CSI is unnecessary (the TRPs are unrecognizable (transparent) for the UE); however, because the CSI-RS resources are to be transmitted by a plurality of TRPs instead of one TRP, a new QCL type for the CSI-RS resources may be required.

According to the present embodiment, the UE can be appropriately configured with the CMR for CJT CSI feedback.

<Embodiment #A2>

The present embodiment relates to the IMR.

For CJT, it may be assumed that inter-TRP interference is not present. Only interference of other than X TRPs (interference from other than X TRPs) may be present.

In the CSI report configuration (CSI-ReportConfig) for CJT CSI feedback, the same IMR (ZP CSI-RS resources) may be configured for the CMR from X TRPs. Based on the IMR, interference of other than X TRPs may be measured.

A configuration/indication of the IMR may conform to one of the following options 2-A and 2-B.

[Option 2-A]

For X CMRs, in a second resource setting, only one IMR may be configured. The UE may assume that it is applied to all of the CMRs.

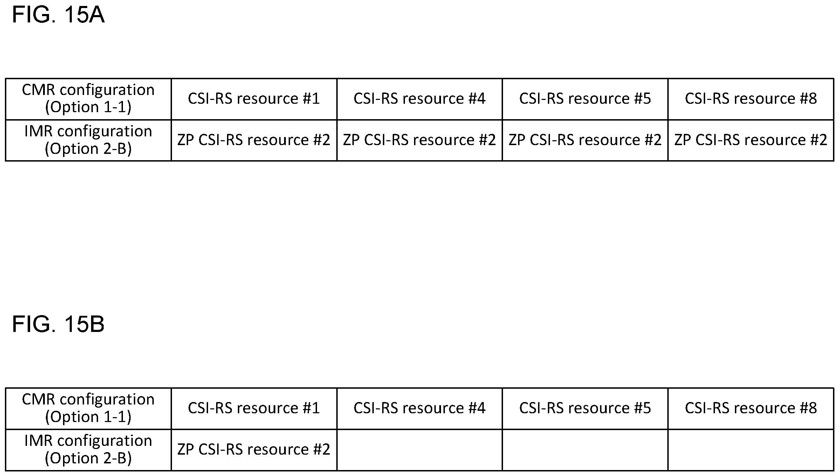

In the example of FIG. 15A, in accordance with option 1-1 described above, four CMRs (CSI-RS resources #1, #4, #5, and #8) are configured in CSI-ReportConfig. In addition, in the CSI-ReportConfig, one IMR (ZP CSI-RS resource #2) is configured in the second resource setting for one CMR. The UE applies the one IMR to the four CMRs.

[Option 2-B]

Although one-on-one CMR-IMR mapping configuration framework is maintained, the same IMR resources may be configured in the second resource setting for each CMR. The UE may assume that the same IMR resources are configured in the second resource setting for each CMR. It may correspond to the CMR in the first resource setting.

In the example of FIG. 15B, in accordance with option 1-1 described above, four CMRs (CSI-RS resources #1, #4, #5, and #8) are configured in CSI-ReportConfig. In addition, in the CSI-ReportConfig, the same IMR (ZP CSI-RS resource #2) is configured in the second resource setting for each CMR. The UE applies corresponding IMR to each CMR.

According to the present embodiment, the UE can be appropriately configured with the IMR for CJT CSI feedback.

<Embodiment #A3>

The present embodiment relates to the codebook/CSI.

In option 1-1 described above, when CMRs of X TRPs are configured in one CSI-ReportConfig, the CSI in one CSI report may conform to one of the following options 3-A to 3-D.

<<Option 3-A>>

The CSI report may include at least one of the following CJT CSIs. The number of CJT CSIs may be less than 4, or may be greater than 5.

- First CJT CSI may include existing single-TRP CSI and CRI for the first TRP/CMR/CSI-RS resources/CMR group/CSI-RS resource set.
- Second CJT CSI may include existing single-TRP CSI and CRI for the second TRP/CMR/CSI-RS resources/CMR group/CSI-RS resource set, and include at least one index of an inter-TRP phase index from the inter-TRP phase phasing matrix, an inter-TRP amplitude index from the inter-TRP amplitude matrix, and a single inter-TRP coefficient index from the inter-TRP coefficient matrix. The index may be an index based on comparison with the first CJT CSI.

- Third CJT CSI may include existing single-TRP CSI and CRI for the third TRP/CMR/CSI-RS resources/CMR group/CSI-RS resource set, and include at least one index of an inter-TRP phase index from the inter-TRP phase phasing matrix, an inter-TRP amplitude index from the inter-TRP amplitude matrix, and a single inter-TRP coefficient index from the inter-TRP coefficient matrix. The index may be an index based on comparison with the first CJT CSI.
- Fourth CJT CSI may include existing single-TRP CSI and CRI for the fourth TRP/CMR/CSI-RS resources/CMR group/CSI-RS resource set, and include at least one index of an inter-TRP phase index from the inter-TRP phase phasing matrix, an inter-TRP amplitude index from the inter-TRP amplitude matrix, and a single inter-TRP coefficient index from the inter-TRP coefficient matrix. The index may be an index based on comparison with the first CJT CSI.

An i-th CJT CSI ($i \geq 2$) may include an index based on comparison of the first CJT CSI and an i-th CJT CSI.

A CRI index of the first CJT CSI may be selected by the UE from X CMRs, and reported using a bit size of log2(X). The CRI index may be the reference CSI with the best channel condition.

Using the CSIs, the base station can update the CJT CSIs of the 2-TRP, 3-TRP, and 4-TRP with the reference TRP for dynamic scheduling.

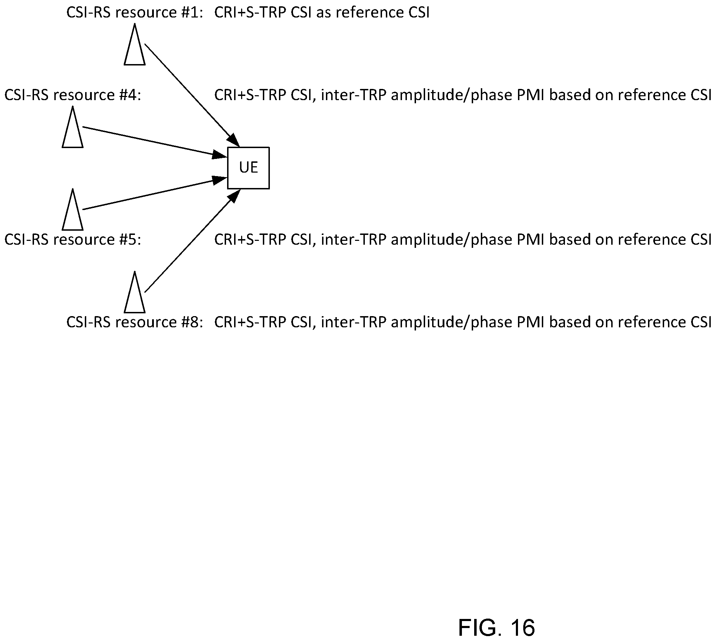

In the example of FIG. 16, in accordance with option 1-1 described above, four CMRs (CSI-RS resources #1, #4, #5, and #8) are configured in CSI-ReportConfig. The CSI report includes the first to fourth CJT CSIs. The first CJT CSI includes the CRI and the single-TRP CSI as the reference CSI based on CSI-RS resource #1. The second CJT CSI includes the CRI and the single-TRP CSI based on CSI-RS resource #4 and the inter-TRP amplitude/phase index based on the reference CSI (the single-TRP CSI of CSI-RS resource #1). The third CJT CSI includes the CRI and the single-TRP CSI based on CSI-RS resource #5 and the inter-TRP amplitude/phase index based on the reference CSI (the single-TRP CSI of CSI-RS resource #1). The fourth CJT CSI includes the CRI and the single-TRP CSI based on CSI-RS resource #8 and the inter-TRP amplitude/phase index based on the reference CSI (the single-TRP CSI of CSI-RS resource #1).

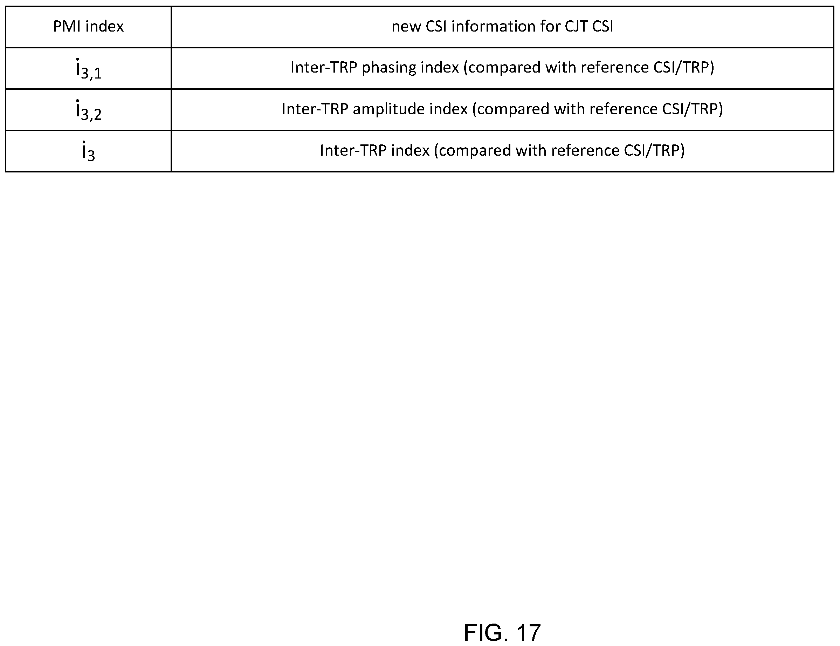

FIG. 17 shows an example of a new codebook for at least one of the inter-TRP phase index, the inter-TRP amplitude index, and the inter-TRP coefficient index (including both of amplitude and phase). PMI index $i_{3,1}$ indicates the inter-TRP phase index (compared with the reference CSI/TRP) as new CSI information for the CJT CSI. PMI index $i_{3,2}$ indicates the inter-TRP amplitude index (compared with the reference CSI/TRP) as new CSI information for the CJT CSI. PMI index $i_3$ indicates the inter-TRP coefficient index (compared with the reference CSI/TRP) as new CSI information for the CJT CSI.

<<Option 3-B>>

The CSI report may include at least one of the following CJT CSIs. The number of CJT CSIs may be less than 4, or may be greater than 5.

- First CJT CSI may include existing single-TRP CSI and CRI for the first TRP/CMR/CSI-RS resources/CMR group/CSI-RS resource set.
- Second CJT CSI may include existing single-TRP CSI and CRI for the second TRP/CMR/CSI-RS resources/CMR group/CSI-RS resource set, and include at least one index of an inter-TRP phase index from the inter-TRP phase phasing matrix, an inter-TRP amplitude index from the inter-TRP amplitude matrix, and a single inter-TRP coefficient index from the inter-TRP coefficient matrix. The index may be an index based on comparison with the first CJT CSI.
- Third CJT CSI may include existing single-TRP CSI and CRI for the third TRP/CMR/CSI-RS resources/CMR group/CSI-RS resource set, and include at least one index of an inter-TRP phase index from the inter-TRP phase phasing matrix, an inter-TRP amplitude index from the inter-TRP amplitude matrix, and a single inter-TRP coefficient index from the inter-TRP coefficient matrix. The index may be at least one of an index based on comparison with the first CJT CSI and an index based on comparison with the second CJT CSI.
- Fourth CJT CSI may include existing single-TRP CSI and CRI for the fourth TRP/CMR/CSI-RS resources/CMR group/CSI-RS resource set, and include at least one index of an inter-TRP phase index from the inter-TRP phase phasing matrix, an inter-TRP amplitude index from the inter-TRP amplitude matrix, and a single inter-TRP coefficient index from the inter-TRP coefficient matrix. The index may be at least one of an index based on comparison with the first CJT CSI, an index based on comparison with the second CJT CSI, and an index based on comparison with the third CJT CSI.

An i-th CJT CSI ($i \geq 2$) may include an index based on comparison of the first to (i-1)-th CJT CSIs.

A CRI index of the first CJT CSI may be selected by the UE from X CMRs, and reported using a bit size of log2(X). The CRI index may be the reference CSI with the best channel condition. A CRI index of the second CJT CSI may be the second best CSI. A CRI index of the third CJT CSI may be the third best CSI. A CRI index of the fourth CJT CSI may be the fourth best CSI.

In comparison to option 3-A, in option 3-B, the base station can update any CJT CSI of the 2-TRP, 3-TRP, and 4-TRP with the reference TRP for dynamic scheduling.

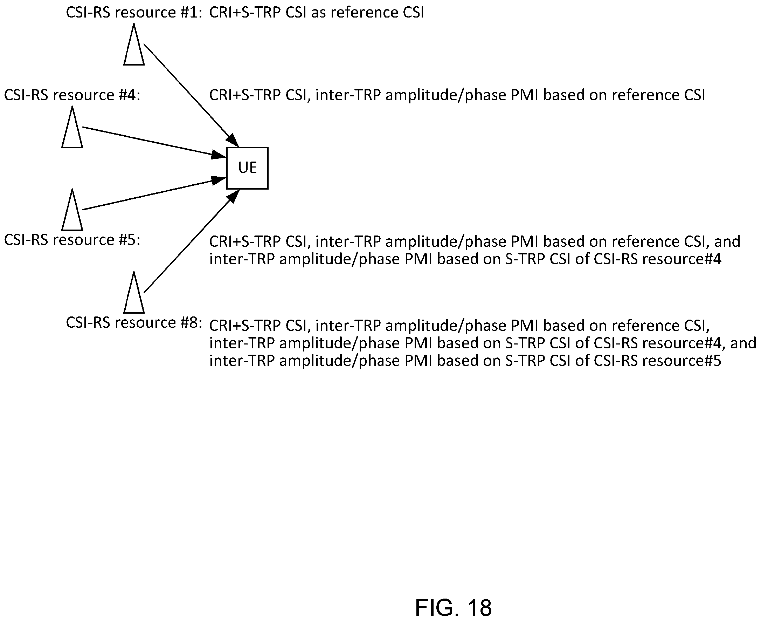

In the example of FIG. 18, in accordance with option 1-1 described above, four CMRs (CSI-RS resources #1, #4, #5, and #8) are configured in CSI-ReportConfig. The CSI report includes the first to fourth CJT CSIs. The first CJT CSI includes the CRI and the single-TRP CSI as the reference CSI based on CSI-RS resource #1. The second CJT CSI includes the CRI and the single-TRP CSI based on CSI-RS resource #4 and the inter-TRP amplitude/phase index based on the reference CSI (the single-TRP CSI of CSI-RS resource #1). The third CJT CSI includes the CRI and the single-TRP CSI based on CSI-RS resource #5, the inter-TRP amplitude/phase index based on the reference CSI (the single-TRP CSI of CSI-RS resource #1), and the inter-TRP amplitude/phase index based on the single-TRP CSI of CSI-RS resource #4. The fourth CJT CSI includes the CRI and the single-TRP CSI based on CSI-RS resource #8, the inter-TRP amplitude/-phase index based on the reference CSI (the single-TRP CSI of CSI-RS resource #1), the inter-TRP amplitude/phase index based on the single-TRP CSI of CSI-RS resource #4, and the inter-TRP amplitude/phase index based on the single-TRP CSI of CSI-RS resource #5.

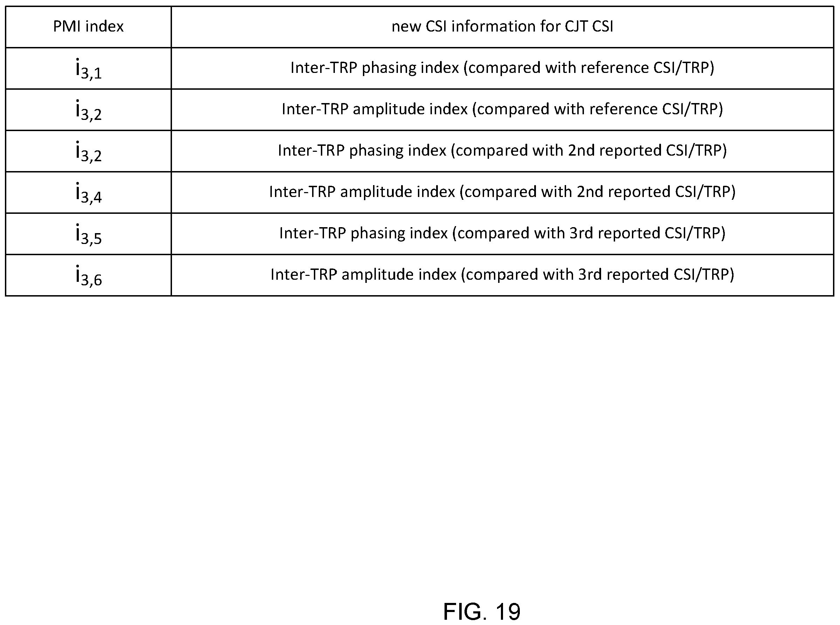

FIG. 19 shows an example of a new codebook for at least one of the inter-TRP phase index, the inter-TRP amplitude index, and the inter-TRP coefficient index (including both of amplitude and phase). PMI index $i_{3,1}$ indicates the inter-TRP phase index (compared with the reference CSI/TRP) as new CSI information for the CJT CSI. PMI index $i_{3,2}$ indicates the inter-TRP amplitude index (compared with the reference CSI/TRP) as new CSI information for the CJT CSI. PMI index $i_{3,3}$ indicates the inter-TRP phase index (compared with the second reported CSI/TRP) as new CSI information for the CJT CSI. PMI index $i_{3,4}$ indicates the inter-TRP phase index (compared with the second reported CSI/TRP) as new CSI information for the CJT CSI. PMI index $i_{3,5}$ indicates the inter-TRP phase index (compared with the third reported CSI/TRP) as new CSI information for the CJT CSI. PMI index $i_{3,6}$ indicates the inter-TRP amplitude index (compared with the third reported CSI/TRP) as new CSI information for the CJT CSI.

<<Option 3-C>>

Based on option 3-A/3-B described above, for the second/third/fourth CJT contents, at least one of the following additional contents may be reported. The number of CJT CSIs may be less than 4, or may be greater than 5.

- The second CJT CSI may further include a CQI (2-TRP CQI) assuming 2-TRP CJT of the CRI in the first CJT CSI and the CRI in the second CJT CSI (the CMR for the first CJT CSI and the CMR for the second CJT CSI).
- The third CJT CSI may further include at least one of a CQI assuming 2-TRP CJT of the CRI in the first CJT CSI and the CRI in the third CJT CSI (the CMR for the first CJT CSI and the CMR for the third CJT CSI) and a CQI (3-TRP CQI) assuming 3-TRP CJT of the CRI in the first CJT CSI, the CRI in the second CJT CSI, and the CRI in the third CJT CSI (the CMR for the first CJT CSI, the CMR for the second CJT CSI, and the CMR for the third CJT CSI).
- The fourth CJT CSI may further include at least one of a CQI assuming 2-TRP CJT of the CRI in the first CJT CSI and the CRI in the fourth CJT CSI (the CMR for the first CJT CSI, the CMR for the fourth CJT CSI, and the CMR for the second CJT CSI) and a CQI (4-TRP CQI) assuming 4-TRP CJT of the CRI in the first CJT CSI, the CRI in the second CJT CSI, the CRI in the third CJT CSI, and the CRI in the fourth CJT CSI (the CMR for the first CJT CSI, the CMR for the second CJT CSI, the CMR for the third CJT CSI, and the CMR for the fourth CJT CSI).

An i-th CJT CSI (i ≥ 2) may include a CQI assuming i-TRP CJT of first to i-th.

A new CQI (X-TRP CQI) report for at least one of 2-TRP CJT (one TRP is the reference TRP/CSI), 3-TRP CJT (one TRP is the reference TRP/CSI), and 4-TRP CJT (one TRP is the reference TRP/CSI) may be defined.

Whether or not the new X-TRP CQI is reported in the X-TRP CJT CSI may be configured in an RRC IE (CSI-ReportConfig).

[Variations]

An additional new X-TRP CQI may not be reported, and instead, an existing single-TRP CQI may be reported in each CJT CSI. X-TRP CJT may be CJT including the CMRs/TRPs reported in up to the i-th CJT CSI. For example, 4-TRP CJT may be CJT including the CMRs/TRPs reported in up to the i-th CJT CSI.

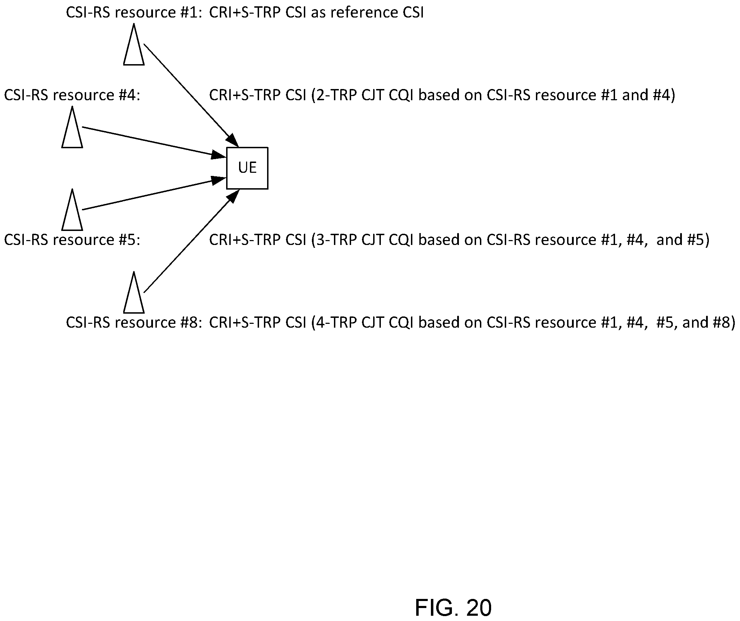

In the example of FIG. 20, in accordance with option 1-1 described above, four CMRs (CSI-RS resources #1, #4, #5, and #8) are configured in CSI-ReportConfig. The CSI report includes the first to fourth CJT CSIs. The first CJT CSI includes the CRI and the single-TRP CSI as the reference CSI based on CSI-RS resource #1. The second CJT CSI may include the CRI and the single-TRP CSI based on CSI-RS resource #4, and the single-TRP CQI may be replaced with the 2-TRP CQI (based on CSI-RS resources #1 and #4). The third CJT CSI may include the CRI and the single-TRP CSI based on CSI-RS resource #5, and the single-TRP CQI may be replaced with the 3-TRP CQI (based on CSI-RS resources #1, #4, and #5). The fourth CJT CSI may include the CRI and the single-TRP CSI based on CSI-RS resource #8, and the single-TRP CQI may be replaced with the 4-TRP CQI (based on CSI-RS resources #1, #4, #5, and #8).

<<Option 3-D>>

Based on option 3-A/3-B described above, for the second/third/fourth CJT contents, at least one of the following additional contents may be reported. The number of CJT CSIs may be less than 4, or may be greater than 5. Similarly to up to the (i-1)-th CJT CSIs, the i-th CJT CSI may be based on up to the (i-1)-th CJT CSIs.

- The second CJT CSI may further include a CQI (2-TRP CQI) assuming 2-TRP CJT of the CRI in the first CJT CSI and the CRI in the second CJT CSI (the CMR for the first CJT CSI and the CMR for the second CJT CSI).
- The third CJT CSI may further include at least one of a CQI assuming 2-TRP CJT of the CRI in the first CJT CSI and the CRI in the third CJT CSI (the CMR for the first CJT CSI and the CMR for the third CJT CSI), a CQI assuming 2-TRP CJT of the CRI in the second CJT CSI and the CRI in the third CJT CSI (the CMR for the second CJT CSI and the CMR for the third CJT CSI), and a CQI (3-TRP CQI) assuming 3-TRP CJT of the CRI in the first CJT CSI, the CRI in the second CJT CSI, and the CRI in the third CJT CSI (the CMR for the first CJT CSI, the CMR for the second CJT CSI, and the CMR for the third CJT CSI).
- The fourth CJT CSI may further include at least one of a CQI assuming 2-TRP CJT of the CRI in the first CJT CSI and the CRI in the fourth CJT CSI (the CMR for the first CJT CSI, the CMR for the fourth CJT CSI, and the CMR for the second CJT CSI), a CQI assuming 2-TRP CJT of the CRI in the second CJT CSI and the CRI in the fourth CJT CSI (the CMR for the second CJT CSI, the CMR for the fourth CJT CSI, and the CMR for the second CJT CSI), a CQI assuming 2-TRP CJT of the CRI in the third CJT CSI and the CRI in the fourth CJT CSI (the CMR for the third CJT CSI, the CMR for the fourth CJT CSI, and the CMR for the second CJT CSI), a CQI assuming 3-TRP CJT of the CRI in the first CJT CSI, the CRI in the second CJT CSI, and the CRI in the fourth CJT CSI (the CMR for the first CJT CSI, the CMR for the second CJT CSI, and the CMR for the fourth CJT CSI), a CQI assuming 3-TRP CJT of the CRI in the first CJT CSI, the CRI in the third CJT CSI, and the CRI in the fourth CJT CSI (the CMR for the first CJT CSI, the CMR for the third CJT CSI, and the CMR for the fourth CJT CSI), a CQI assuming 3-TRP CJT of the CRI in the second CJT CSI, the CRI in the third CJT CSI, and the CRI in the fourth CJT CSI (the CMR for the second CJT CSI, the CMR for the third CJT CSI, and the CMR for the fourth CJT CSI), and a CQI (4-TRP CQI) assuming 4-TRP CJT of the CRI in the first CJT CSI, the CRI in the second CJT CSI, the CRI in the third CJT CSI, and the CRI in the fourth CJT CSI (the CMR for the first CJT CSI, the CMR for the second CJT CSI, the CMR for the third CJT CSI, and the CMR for the fourth CJT CSI).

An i-th CJT CSI ($i \geq 2$) may include a CQI assuming j ($2 \leq j \leq i$)-TRP CJT using at least two of first to i-th.

A new CQI (X-TRP CQI) report for at least one of 2-TRP CJT (with/without an indication of two TRPs), 3-TRP CJT (with/without an indication of three TRPs), and 4-TRP CJT may be defined.

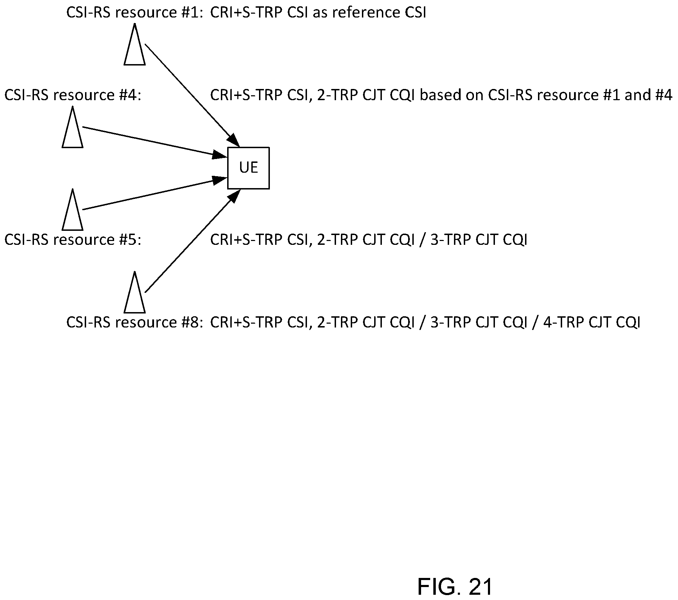

In the example of FIG. 21, in accordance with option 1-1 described above, four CMRs (CSI-RS resources #1, #4, #5, and #8) are configured in CSI-ReportConfig. The CSI report includes the first to fourth CJT CSIs. The first CJT CSI includes the CRI and the single-TRP CSI as the reference CSI based on CSI-RS resource #1. The second CJT CSI includes the CRI and the single-TRP CSI based on CSI-RS resource #4 and the 2-TRP CQI (based on CSI-RS resources #1 and #4). The third CJT CSI includes the CRI and the single-TRP CSI based on CSI-RS resource #5 and the 2-TRP CQI/3-TRP CQI. The fourth CJT CSI includes the CRI and the single-TRP CSI based on CSI-RS resource #8 and the 2-TRP CQI/3-TRP CQI/4-TRP CQI.

Whether or not the new X-TRP CQI is reported in the X-TRP CJT CSI may be configured in an RRC IE (CSI-ReportConfig).

In option 1-2 described above, one CSI report may correspond to each CSI-ReportConfig for X associated CSI-ReportConfigs. In this case, option 3-A/3-B/3-C/3-D may be applied with the following difference.

- First/second/third/fourth CJT CSI contents in option 3-A/3-B/3-C/3-D may be reported in separate CSI reports for corresponding CSI-ReportConfigs. In this case, the CRI report may be unnecessary in each CSI report.
- In each CSI report, a reference CSI indicator may be explicitly indicated together with new contents of one CJT CSI. For a CSI report with reference CSI indicator = true/yes, contents in the first CJT CSI may be reported. For other CSI reports with reference CSI indicator = falth/no, contents in the second/third/fourth CJT CSI may be reported.

According to the present embodiment, the UE can appropriately report the CJT CSI.

<Embodiment #A4>

The present embodiment relates to the codebook/CSI/quantization.

A new codebook table (quantization table) for new report contents in Embodiment #A3 may be defined.

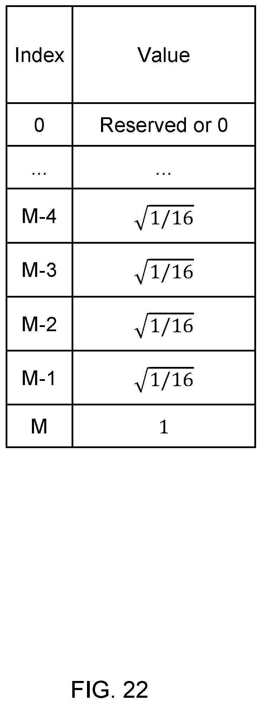

For the inter-TRP amplitude codebook, a new table may be defined, or an existing table (for example, the 16-level quantization table/8-level quantization table described above) may be reused. FIG. 22 shows an example of a new table for the inter-TRP amplitude codebook. For example, when M = 3, 2 bits can be used for indication/report thereof, and four values can be indicated/reported. For example, when M = 4, 3 bits can be used for indication/report thereof, and eight values can be indicated/reported.

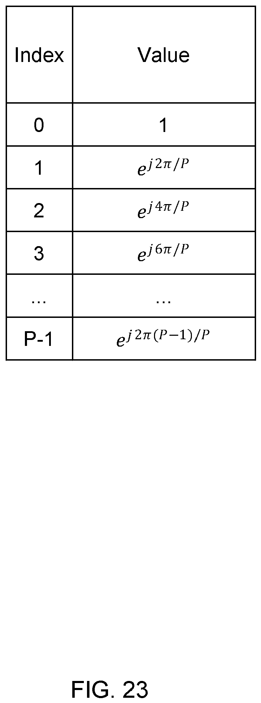

For the inter-TRP phase codebook, a new table may be defined, or an existing table (for example, the 16-level quantization table/8-level quantization table described above) may be reused. FIG. 23 shows an example of a new table for the inter-TRP phase codebook. For example, when P = 4, 2 bits can be used for indication/report thereof, and four values can be indicated/reported. For example, when P = 8, 3 bits can be used for indication/report thereof, and eight values can be indicated/reported. For indication/report of the phase, a range of $[0, 2\pi)$ may be divided in to P parts ($\varphi_{l,i} = \exp(j2\pi c_i/P)$ and $c_i \in \{0, ..., P - 1\}$).

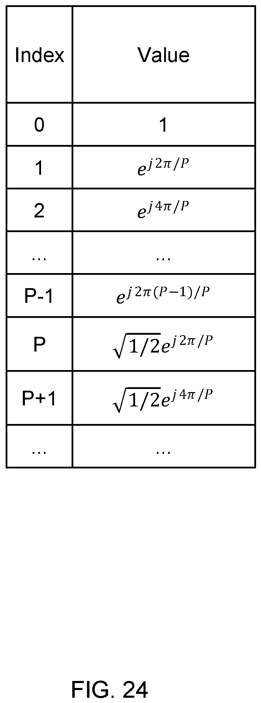

For the inter-TRP coefficient codebook (inter-TRP codebook), a new table may be defined. FIG. 24 shows an example of a new table for the inter-TRP coefficient codebook. Each value may include both of amplitude and phase.

According to the present embodiment, the UE can appropriately quantize the CJT CSI.

<Embodiment #A5>

The present embodiment relates to the CSI part 1/2 and mapping order.

In option 1-1 described above, for a new CJT CSI report for one TRP for one CSI-ReportConfig, a separator between the CSI part 1 and the CSI part 2 may be defined.

The X-TRP CQI may be present in one of the CSI part 1 and the CSI part 2.

A new mapping order table for one or more CSI fields of one CSI report for the CSI part 1 and a new mapping order table for one or more CSI fields of one CSI report for the CSI part 2 may be defined. For example, the CRI may be present at the start of the part 1. The inter-TRP coefficient (phase/amplitude) index may be present at the end of the part 2.

The mapping order of one or more CSI fields in the CSI part 1 for the CJT CSI for one TRP may conform to the following.

- CRI (if reported)
- Reference CSI indicator (if reported)
- Rank indicator (RI)
- Channel quality indicator (CQI) (single-TRP CQI or X-TRP CQI based on a configuration)
- Number of non-zero amplitude coefficients

The CSI part 1 may have a fixed payload size.

The mapping order of one or more CSI fields in the CSI part 2 for the CJT CSI for one TRP may conform to the following.

- Over-sampling factor
- Plurality of indices of 2D-DFT bases (SD vectors)
- Index $M_{initial}$ of an initial DFT basis (FD basis) of a selected DFT window
- Selected DFT bases (FD bases) of each layer
- Bitmap of each layer
- Non-zero LC coefficients (phase and amplitude) of each layer
- Strongest (of the highest strength) coefficient indicator of each layer
- Amplitude of the strongest coefficient of each layer/each polarization
- Index of the inter-TRP amplitude of each layer (of each polarization) (if reported)
- Index of the inter-TRP phase of each layer (of each polarization) (if reported)
- Index of the inter-TRP coefficient of each layer (of each polarization) (if reported)
- Additional X-TRP CQI (if reported) (which may be present in the CSI part 1)

The first/second/third/fourth CJT CSI contents may be present in one CSI report.

The CSI report may conform to one of the following options 5-1 and 5-2.

[Option 5-1]

The CSI part 1 for each of the first/second/third/fourth CJT CSIs may include contents of "one CSI part 1 for the CJT CSI for one TRP" described above. The CSI part 2 for each of the first/second/third/fourth CJT CSIs may include contents of "one CSI part 2 for the CJT CSI for one TRP" described above.

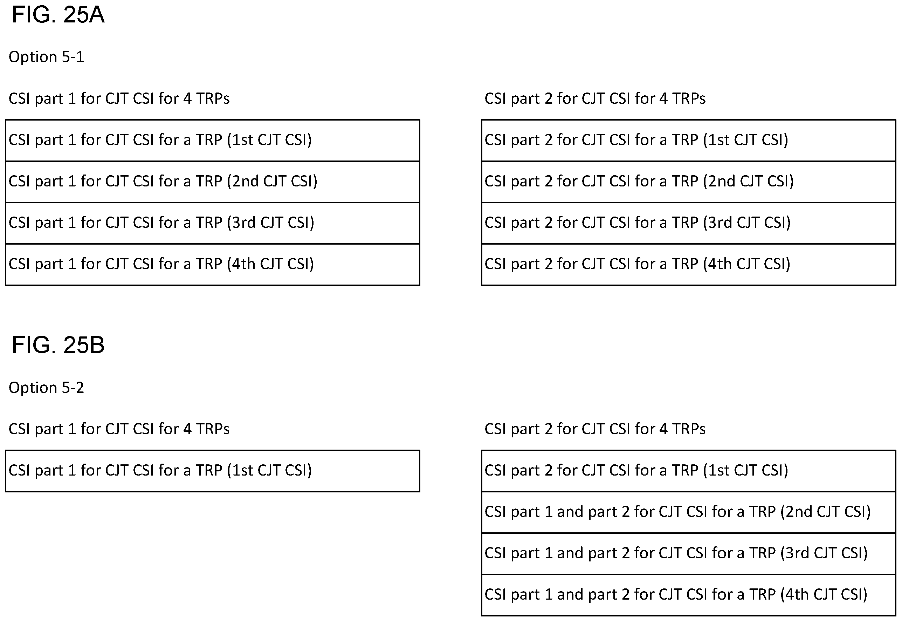

FIG. 25A shows an example of the CSI parts 1 and 2 for the 4-TRP CJT CSI. In accordance with "one CSI part 1 for the CJT CSI for one TRP" described above, the CSI part 1 for the first TRP (CJT CSI), the CSI part 1 for the second TRP (CJT CSI), the CSI part 1 for the third TRP (CJT CSI), and the CSI part 1 for the fourth TRP (CJT CSI) are reported. In accordance with "one CSI part 2 for the CJT CSI for one TRP" described above, the CSI part 2 for the first TRP (CJT CSI), the CSI part 2 for the second TRP (CJT CSI), the CSI part 2 for the third TRP (CJT CSI), and the CSI part 2 for the fourth TRP (CJT CSI) are reported.

[Option 5-2]

The CSI part 1 may include contents of "one CSI part 1 for the CJT CSI for one TRP" described above for the reference (first) CJT CSI. The CSI part 2 may include other contents.

FIG. 25B shows an example of the CSI parts 1 and 2 for the 4-TRP CJT CSI. In accordance with "one CSI part 1 for the CJT CSI for one TRP" described above, the CSI part 1 for the first TRP (CJT CSI) is reported. In accordance with "one CSI part 2 for the CJT CSI for one TRP" described above, the CSI part 2 for the first TRP (CJT CSI) is reported. In accordance with "one CSI part 1 for the CJT CSI for one TRP" and "one CSI part 2 for the CJT CSI for one TRP" described above, the CSI parts 1 and 2 for the second TRP (CJT CSI), the CSI parts 1 and 2 for the third TRP (CJT CSI), and the CSI parts 1 and 2 for the fourth TRP (CJT CSI) are reported.

In a new mapping order table for one or more CSI fields of one CSI report for the CSI part 1/2, the CSIs may be arranged in order of the TRPs (the first CJT CSI, the second CJT CSI, the third CJT CSI, and the fourth CJT CSI).

According to the present embodiment, the UE can appropriately report the CJT CSI.

<Embodiment #A6>

The present embodiment relates to the CSI part 2.

For "one CSI part 2 for the CJT CSI for one TRP" described above, grouping of the CSI part 2 (based on the group 0/1/2 described above) may conform to one of the following options 6-1 and 6-2.

[Option 6-1]

A new index of the inter-TRP amplitude/phase/coefficient may be assigned in the group 2.

For example, the group 2 described above may be changed as follows.

- Group 2: floor($K^{NZ}/2$) lowest (bottom) priority elements out of $i_{1,7,l}$, floor ($K^{NZ}/2$) lowest (bottom) priority elements out of $i_{2,4,l}$, floor ($K^{NZ}/2$) lowest (bottom) priority elements out of $i_{2,5,l}$ (l = 1, ..., v), and the index of the inter-TRP amplitude/phase/coefficient of each layer

[Option 6-2]

A new group 3 may be introduced. A new index of the inter-TRP amplitude/phase/coefficient may be assigned in the group 3.

In CSI omission, the group 3 may have a priority lower than the group 2.

For example, the following group 3 may be defined in addition to the groups 0 to 2 described above.

- Group 3: Index of the inter-TRP amplitude/phase/coefficient of each layer

When the X-TRP CQI is present in the CSI part 2, the X-TRP CQI may be assigned in the group 0 or 1 having a higher priority.

In "the CSI parts 1 and 2 for the 4-TRP CJT CSI" of option 5-2 described above, the contents of the original CSI part 1 for the CJT CSI (second/third/fourth CJT CSI) for one TRP are present in the CSI part 2. The contents of the original CSI part 1 may be assigned in the group 0 in the CSI part 2.

If the group 3 is introduced, priority report levels for the part 2 CSI may be changed.

A relationship between CSI part 2 priorities and the mapping order table of the CSI part 2 may conform to the following. $N_{Rep}$ may be the number of CSI reports.

- Priority 0: Group 0 CSI for the CSI report configured with 'typeII-r16'' or 'typeII-PortSelection-r16'' or 'xx-CJT-r18' for CSI report 1 to $N_{Rep}$; part 2 wideband CSI for the CSI report configured with other than the above
- Priority 1: Group 1 CSI for CSI report 1 if configured with 'typeII-r16'' or 'typeII-PortSelection-r16'' or 'xx-CJT-r18'; part 2 subband CSI of an even-numbered subband for CSI report 1 if configured with other than the above
- Priority 2: Group 2 CSI for CSI report 1 if configured with 'typeII-r16'' or 'typeII-PortSelection-r16'' or 'xx-CJT-r18'; part 2 subband CSI of an odd-numbered subband for CSI report 1 if configured with other than the above

- Priority 3: Group 3 CSI for CSI report 1 if configured with 'typeII-r16'' or 'typeII-PortSelection-r16'' or 'xx-CJT-r18'; part 2 subband CSI of an odd-numbered subband for CSI report 1 if configured with other than the above
- Priority 4: Group 1 CSI for CSI report 2 if configured with 'typeII-r16'' or 'typeII-PortSelection-r16'' or 'xx-CJT-r18'; part 2 subband CSI of an even-numbered subband for CSI report 1 if configured with other than the above
- Priority 5: Group 2 CSI for CSI report 2 if configured with 'typeII-r16'' or 'typeII-PortSelection-r16'' or 'xx-CJT-r18'; part 2 subband CSI of an odd-numbered subband for CSI report 1 if configured with other than the above
- Priority 6: Group 3 CSI for CSI report 2 if configured with 'typeII-r16'' or 'typeII-PortSelection-r16'' or 'xx-CJT-r18'; part 2 subband CSI of an odd-numbered subband for CSI report 1 if configured with other than the above
- Priority 7 and subsequent priorities may be defined in accordance with a rule similar to priorities 1 to 6.

In priorities 1 to 3, the mapping order of the CSIs of the groups 1 to 3 for CSI report 1 if configured with 'xx-CJT-r18' may conform to one of the following mapping orders 1 and 2.

[Mapping Order 1]

- Group 1 CSI for CSI report 1 for the TRP of the first CJT CSI
- Group 1 CSI for CSI report 1 for the TRP of the second CJT CSI
- Group 1 CSI for CSI report 1 for the TRP of the third CJT CSI
- Group 1 CSI for CSI report 1 for the TRP of the fourth CJT CSI
- Group 2 CSI for CSI report 1 for the TRP of the first CJT CSI
- Group 2 CSI for CSI report 1 for the TRP of the second CJT CSI
- Group 2 CSI for CSI report 1 for the TRP of the third CJT CSI
- Group 2 CSI for CSI report 1 for the TRP of the fourth CJT CSI
- Group 3 CSI for CSI report 1 for the TRP of the first CJT CSI
- Group 3 CSI for CSI report 1 for the TRP of the second CJT CSI
- Group 3 CSI for CSI report 1 for the TRP of the third CJT CSI
- Group 3 CSI for CSI report 1 for the TRP of the fourth CJT CSI

[Mapping Order 2]

- Group 1 CSI for CSI report 1 for the TRP of the first CJT CSI
- Group 2 CSI for CSI report 1 for the TRP of the first CJT CSI
- Group 3 CSI for CSI report 1 for the TRP of the first CJT CSI
- Group 1 CSI for CSI report 1 for the TRP of the second CJT CSI
- Group 2 CSI for CSI report 1 for the TRP of the second CJT CSI
- Group 3 CSI for CSI report 1 for the TRP of the second CJT CSI
- Group 1 CSI for CSI report 1 for the TRP of the third CJT CSI
- Group 2 CSI for CSI report 1 for the TRP of the third CJT CSI
- Group 3 CSI for CSI report 1 for the TRP of the third CJT CSI
- Group 1 CSI for CSI report 1 for the TRP of the fourth CJT CSI
- Group 2 CSI for CSI report 1 for the TRP of the fourth CJT CSI
- Group 3 CSI for CSI report 1 for the TRP of the fourth CJT CSI

According to the present embodiment, the UE can appropriately report the CJT CSI.

((Embodiment #B))

<Embodiment #B1>

If reporting of the CSI of each TRP is configured in one CSI report for the CJT CSI, one or more restrictions of the following restrictions 1 to 3 may be taken into consideration for the CSI for each TRP.

<<Restriction 1>>

The same RI is assumed for CSI measurement of each TRP. Only a common RI report may be required. For example, the RI report may be included in the first CJT CSI, and the RI report need not be included in the second/third/fourth CJT CSI. If the RI reports are different for the CSI of each TRP, it is difficult for the base station to update the RIs for the CJT CSIs.

<<Restriction 2>>

For each TRP, at least one of a common parameter and a separate parameter is configured. Here, each TRP, each CMR, each CMR group, and each CMR set may be interchangeably interpreted. The parameter may be represented by at least one of the following parameter fields.

- A field indicating a combination of supported parameters (codebook parameters) (value/index corresponding to a combination of at least one value of L, $p_v$, $\beta$, $\alpha$, and M) (paramCombination).
- A field indicating how the PMI subband is defined for each CQI subband (numberOfPMI-SubbandsPerCQI-Subband).
- The number L of beams used for a linear combination (numberOfBeams).
- The size of the PSK alphabet, QPSK or 8-PSK (phaseAlphabetSize).
- A field to be true if a subband amplitude report is activated (subbandAmplitude).
- A value of N (for example, parameter N $\in$ {2, 4} is configured when M = 2) (valueOfN).

In Rel. 15/16/17, these parameters are configured for each codebook configuration (CodebookConfig) and for each CSI report configuration (CSI-ReportConfig). In a CJT CSI configuration, some of these parameters may be configured for each TRP. In the CJT CSI configuration, the CSI of the second/third/fourth TRP may have coarser feedback granularity and smaller overhead than the CSI of the first TRP. In paramCombination, different (L, $p_v$, $\beta$) combinations may be configured. For the CJT CSI configuration, some parameters (for example, common L) common to the TRPs and some parameters (for example, $p_v$ and $\beta$) specific to a TRP may be configured, using paramCombination.

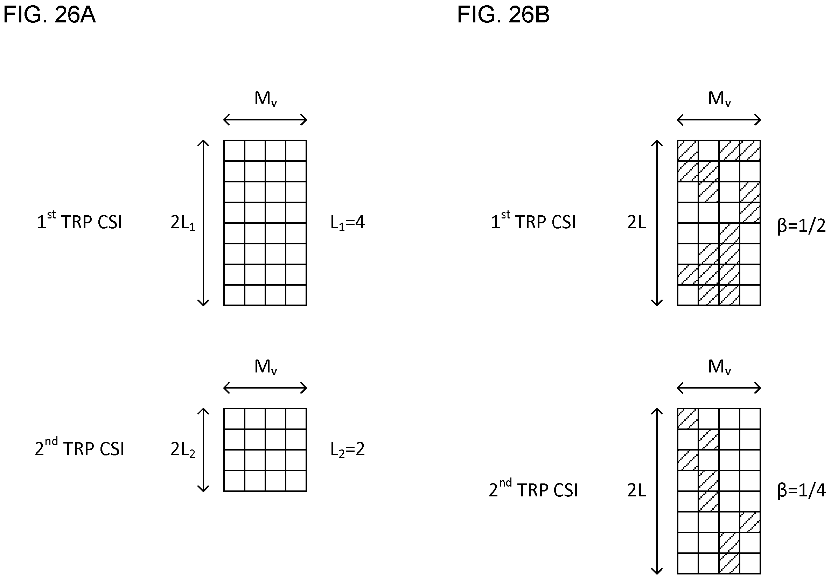

FIG. 26A shows an example of W~ for the first TRP and W~ for the second TRP. As in the present example, different numbers L of SD beams ($L_1$ and $L_2$) may be configured for the CSI of the first TRP and the CSI of the second TRP.

FIG. 26B shows another example of W~ for the first TRP and W~ for the second TRP. As in the present example, the same number L of SD beams and different maximum numbers ($\beta$ = 1/2 and 1/4) of NZCs for each layer for each TRP may be configured.

<<Restriction 3>>

In CSI-ReportConfig, for all of the X TRPs (all of the CMRs/IMRs), at least one of the following configurations 3a to 3d is introduced.

[Configuration 3a] A maximum number of non-zero coefficients (NZCs) for each layer of all of the X TRPs in CSI-ReportConfig.
[Configuration 3b] A maximum number of NZCs for all of the layers of all of the X TRPs in CSI-ReportConfig.
[Configuration 3c] A maximum number of SD beams for all of the X TRPs in CSI-ReportConfig.
[Configuration 3d] A maximum number of the number $M_v$ of FD bases (FD basis vector size) for all of the X TRPs in CSI-ReportConfig.

UE capability signaling for at least one of restrictions 1 to 3 may be introduced.

According to the present embodiment, the UE can appropriately report the CSI for each of the X TRPs in one CSI report, based on a restriction/relationship.

<Embodiment #B2>

If reporting of the CSI of each TRP is configured in one CSI report for the CJT CSI, order/operation of measurements may conform to at least one of the following operations 1 to 4.

<<Operation 1>>

First, (on an assumption of single TRP reception), the best TRP/CRI/CSI (the CSI of the first TRP, the first CJT CSI) is selected. Next, on an assumption of 2-TRP CJT reception, the CSI of the second TRP is measured based on the first CJT CSI. Next, on an assumption of 3-TRP CJT reception, the CSI of the third TRP is measured based on the first and second CJT CSIs. Next, on an assumption of 4-TRP CJT reception, the CSI of the fourth TRP is measured based on the first, second, and the third CJT CSIs. In this case, in measurements of the second, third, and fourth TRP CSIs, the UE may assume different receive beamforming matrices.

<<Operation 2>>

First, (on an assumption of single TRP reception), the best TRP/CRI/CSI (the CSI of the first TRP, the first CJT CSI) is selected. Next, on an assumption of 2-TRP CJT reception, the CSI of the second TRP (similarly, the CSIs of the third and fourth TRPs) is measured based on the first CJT CSI. In this case, in measurements of the second, third, and fourth TRP CSIs, the UE may assume the same receive beamforming matrix.

<<Operation 3>>

First, (on an assumption of single TRP reception), the best TRP/CRI/CSI (the CSI of the first TRP, the first CJT CSI) is selected. Next, on an assumption of 4-TRP CJT reception, the CSIs of the second, third, and fourth TRPs are measured based on the first CJT CSI. In this case, in measurements of the second, third, and fourth TRP CSIs, the UE may assume the same receive beamforming matrix.

<<Operation 4>>

On an assumption of 4-TRP CJT reception, the CSIs of the first, second, third, and fourth TRPs are measured. In this case, in measurements of the first, second, third, and fourth TRP CSIs, the UE may assume the same receive beamforming matrix.

UE capability signaling for at least one of operations 1 to 4 may be introduced.

According to the present embodiment, the UE can appropriately perform measurement for a report of the CSI for each of the X TRPs in one CSI report.

<Embodiment #B3>

For the inter-TRP CSI/PMI (for example, the inter-TRP amplitude and the inter-TRP phase, or only the inter-TRP phase), the UE may conform to at least one of the following reports 1 to 2.

<<Report 1>>

An independent codebook and feedback for the inter-TRP CSI/PMI may be present prior to (over) the existing Rel-16/17 type 2 codebook. The independent codebook and feedback may conform to one of the codebooks and feedbacks in Embodiment #A. The inter-TRP CSI/PMI may conform to at least one of the following reports 1A to 1B.

[Report 1A]

The size of the matrix $W_2$ for the inter-TRP CSI/PMI is $1 \times 1$. This may mean that the inter-TRP PMI between two TRPs is taken into consideration. In this case, $W_2$ may be common to a plurality of layers.

[Report 1B]

The size of the matrix $W_2$ for the inter-TRP CSI/PMI is $N_t \times N_t$, or $K \times K$ based on the Rel-17 type 2 port selection CSI. This may mean that the inter-TRP PMI between the antenna ports from two TRPs is taken into consideration. In this case, $W_2$ may be common to a plurality of layers.

The first CJT CSI for the layer l of the first TRP (best TRP) may be represented by the following expression.

$$W_{1,1}(N_t \times N_3) \;=\; W_1 W^{\sim}_k W_{f,k}^{H} \qquad (B1)$$

The first CJT CSI for the layer l of the first TRP (best TRP) may be represented by the following expression.

$$W'_{1,i}(N_t \times N_3) \;=\; W_{2,i} W_1 W^{\sim}_k W_{f,k}^{H} \qquad (B2)$$

$W_{2,i}(1\times1)$ or $W_{2,i}(N_t\times N_t)$, where $i$ may be an index of the TRP/CMR/CMR group.

The base station may update the 4-TRP CJT CSI, based on the report of $W_{2,i}$, similarly to the principles of the multi-panel codebook. In the present example, for the layer l of TRP #i ($i = \{2, 3, 4\}$), the base station may update $W'_{l,i}$ using reported $W_{2,i}$, with use of the following expression.

$$
\begin{bmatrix} W_{l,1} \\ W'_{l,2} \\ W'_{l,3} \\ W'_{l,4} \end{bmatrix} = \begin{bmatrix} W_{l,1} \\ W_{2,2}W_{l,2} \\ W_{2,3}W_{l,3} \\ W_{2,4}W_{l,4} \end{bmatrix} \qquad (B3)
$$

<<Report 2>>

The matrix $W_2$ for the inter-TRP CSI/PMI may be transmitted together with $\tilde{W}_k W_{f,k}{}^H$, or may be transmitted in $\tilde{W}_k W_{f,k}{}^H$. The inter-TRP CSI/PMI $w_2$ may conform to at least one of the following reports 2a to 2b.

[Report 2a]

For second/third/fourth CJT CSI measurement, the FD bases and the coefficients may be measured together with the first CJT CSI from common $M_v$ configured/indicated from common $M_v$ (common FD bases $W_{f,k}$) across a plurality of TRPs, and the coefficients $\tilde{W}_k$ for the TRPs may be selected together and reported in the CSI for each TRP. The coefficient report may conform to at least one of the following reports 2a-1 to 2a-2.

[[Report 2a-1]]

In the coefficient report of each TRP, an existing report may be reused. In other words, one strongest coefficient indicator (SCI) of each TRP and each layer may be reported. It may have amplitude = 1 and phase = 0 as reference coefficients. Other coefficients of each TRP and each layer may be quantized based on the reference coefficients. A difference of the amplitude/phase between the strongest reference coefficients from the second/third/fourth TRP and the strongest reference coefficients from the first TRP may be added to be reported.

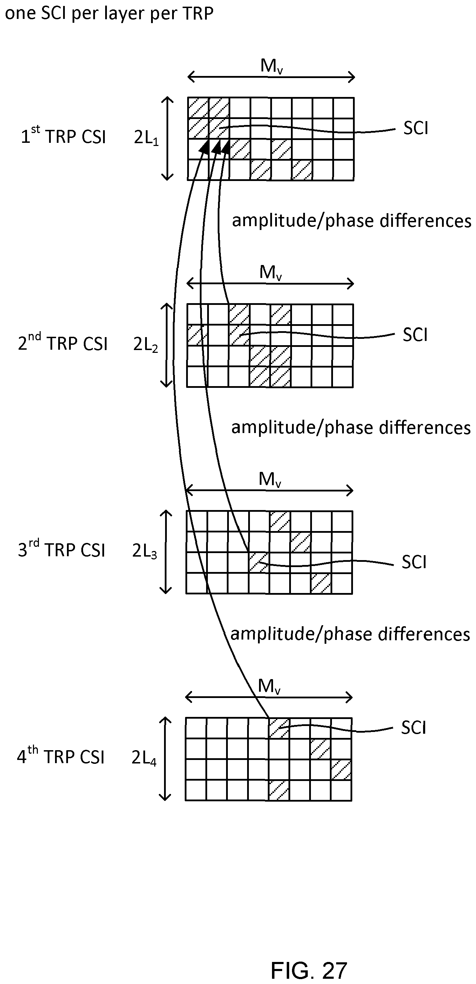

In the example of FIG. 27, a report of one SCI and quantization of each TRP may be performed for each TRP and each layer, and a difference of the amplitude/phase between the reference coefficients from the first TRP and the reference coefficients from other TRPs may be added to be reported. In the present example, although the amplitude/phase of the SCI beams of each TRP is not reported, the difference of the amplitude/phase between the reference coefficients from the first TRP and the reference coefficients from other TRPs is reported.

[[Report 2a-2]]

One strongest coefficient indicator (SCI) of each layer from all of the TRPs may be reported in the first TRP CSI for the coefficient report across a plurality of (all of) TRPs, and based on the strongest coefficients, other coefficients of each TRP and each layer may be quantized. The strongest coefficients may have amplitude = 1 and phase = 0 as the reference coefficients. Other coefficients of each TRP and each layer may be quantized based on the reference coefficients. Thus, the SCI report of each TRP CSI may be absent in the second/third/fourth TRP CSI, and the amplitude/phase of the original SCI may be quantized, and may be fed back based on common SCI, similarly to other non-SCI beams. The original SCI of each TRP may have amplitude = 1 and phase = 0 as a reference. Thus, the amplitude/phase of the SCI of each TRP need not be reported in report 2a-1.

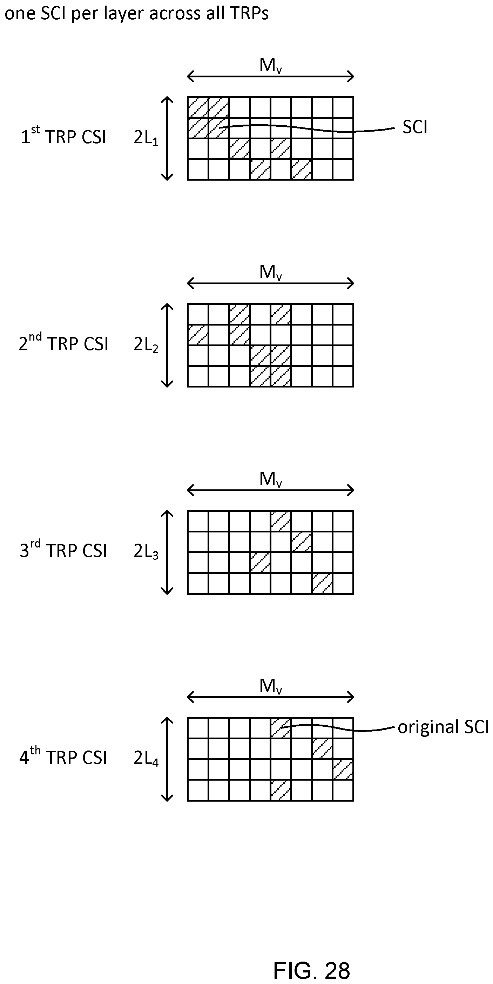

In the example of FIG. 28, a report of one SCI and quantization across all of the TRPs may be performed for each layer across all of the TRPs. In the present example, although the original SCI is not reported in the second/third/fourth TRP CSI, the amplitude/phase of the original SCI beams of each TRP may be reported.

[Report 2b]

For the second/third/fourth CJT CSI measurement, the FD bases and the coefficients are measured together with the first CJT CSI from large configured FD bases. For each TRP, main coefficients may be dispersed in different FD bases for each TRP. In this case, at least one of different $M_{v,i}$ sizes and different start offsets in the FD bases may be reported for each TRP. The report may be specific to a layer for each TRP, or may be common to a plurality of layers for each TRP. The coefficient report may conform to at least one of the following reports 2b-1 to 2b-2.

[[Report 2b-1]]

In the coefficient report of each TRP, an existing report may be reused. In other words, one strongest coefficient indicator (SCI) of each TRP, each layer, and each $M_{v,i}$ may be reported. It may have amplitude = 1 and phase = 0 as reference coefficients. Other coefficients of each TRP, each layer, and each $M_{v,i}$ may be quantized based on the reference coefficients. A difference of the amplitude/phase between the strongest reference coefficients from the second/third/fourth TRP and the strongest reference coefficients from the first TRP may be added to be reported.

A report of one SCI and quantization of each TRP may be performed for each TRP, each layer, and each $M_{v,i}$.

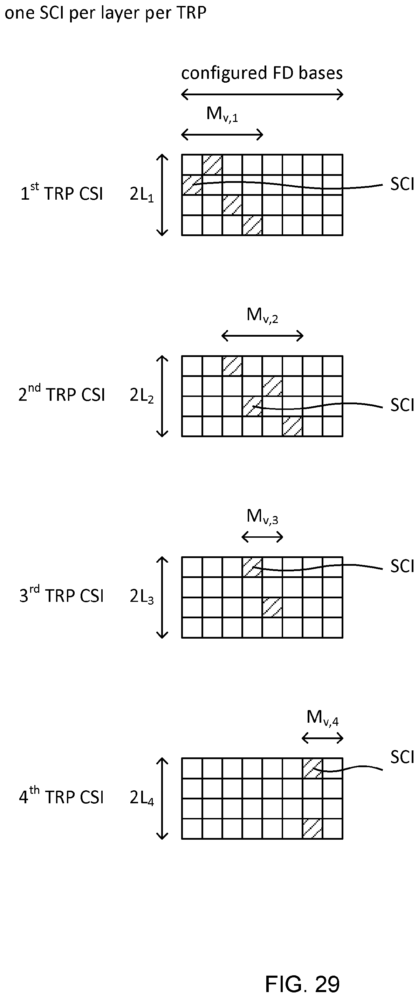

In the example of FIG. 29, $M_{v,i}$ being less than or equal to the number of configured FD bases (FD basis vector size) may be configured for TRP #i (i = {1, 2, 3, 4}). The UE may determine the start offset of the number of FD bases to be selected. $W_{f,k}$ and $W\tilde{}_k$ may be determined using the $M_{v,i}$ FD bases from the start offset out of the configured FD bases. For TRP #i, the number $L_i$ of SD beams (SD DFT vectors) may be configured. For each TRP, the SCI may be selected/reported from the selected FD bases and the configured SD beams.

[[Report 2b-2]]

One strongest coefficient indicator (SCI) across all of $M_{v,i}$ of each layer from all of the TRPs may be reported in the first TRP CSI for the coefficient report across a plurality of (all of) TRPs, and based on the strongest coefficients, other coefficients of each TRP and each layer may be quantized. The strongest coefficients may have amplitude = 1 and phase = 0 as the reference coefficients. Other coefficients of each TRP and each layer may be quantized based on the reference coefficients. Thus, the SCI report of each TRP CSI may be absent in the second/third/fourth TRP CSI, and the amplitude/phase of the original SCI may be quantized, and may be fed back based on common SCI, similarly to other non-SCI beams. A report of the coefficients of each TRP and a report of the coefficients across a plurality of TRPs may be similar to report 2a-1/2a-2, except determination and a report of $M_v$ specific to a TRP.

A report of one SCI across all of $M_{v,i}$ may be performed for each TRP and each layer, and quantization across all of $M_{v,i}$ may be performed for each TRP and each layer.

The $M_v$ size for each TRP may conform to at least one of the following size determination methods 1 and 2.

[Size Determination Method 1]

The $M_v$ size of each TRP (or common to all of the TRPs) may be configured by RRC. The UE may determine the start offset of $M_v$ for each TRP.

[Size Determination Method 2]

A maximum size of $M_v$ of each TRP may be defined in a specification, or may be configured by RRC. The UE may determine the $M_v$ size of each TRP, based on implementation (for example, in consideration of dispersion of good coefficients).

<<Variations>>

$M_{v,i}$ may be non-consecutive. Thus, to report non-consecutive $M_{v,i}$, reporting of the indices of the FD bases for each $M_{v,i}$ may be required.

In report 2, the inter-TRP PMI may be transmitted together with $W\tilde{}_k W_{f,k}^H$, or may be transmitted in $W\tilde{}_k W_{f,k}^H$. One of the inter-TRP CSIs in Embodiment #A may be applied to the inter-TRP PMI.

In comparison to report 2a, report 2b can reduce feedback overhead, using smaller TRP-specific $M_v$.

The UE may support both of report 2a ($M_v$ common to a plurality of TRPs) and report 2b ($M_v$ specific to a TRP). Report 2a and report 2b may be switched based on the number of FD bases/subbands or the like.

According to the present embodiment, the UE can appropriately report the inter-TRP CSI/PMI.

((Embodiment #C))

<Embodiment #C1>

The present embodiment relates to the configuration of the CSI/codebook for the multi-panel.

The UE supports a new multi-panel codebook. The new multi-panel codebook may be referred to as a type 2 multi-panel codebook, may be based on the type 1 multi-panel codebook, and may be an enhancement of the Rel-16/17 type 2 codebook and type 2 port selection codebook.

An antenna configuration for the type 2 multi-panel codebook may conform to at least one of the following antenna configurations 1 and 2.

[Antenna Configuration 1]

A configuration (ng-n1-n2) of ($n_g$, $n_1$, $n_2$) similar to the type 1 multi-panel codebook may be supported.

The maximum number of CSI-RS ports for each CSI-RS resource may be equal to an existing maximum number, which is 32. As the CMR for multi TRP CJT CSI measurement, one CSI-RS resource with different ports corresponding to different TRPs/panels may be configured. For example, $N_g = 2$ may mean X = 2. For example, $N_g = 4$ may mean X = 4. For example, when ng-n1-n2 indicates (4, 2, 2), the number of whole CSI-RS ports may be 4*2*2*2 = 32.

[Antenna Configuration 2]

Number $N_g$ of panels = {2, 3, 4} may be supported/configured, in addition to the configuration (n1-n2) of ($n_1$, $n_2$) supported for the existing type 1 single-panel codebook.

The maximum number of CSI-RS ports for each CSI-RS resource may be equal to an existing maximum number, which is 32. As the CMR for multi TRP CJT CSI measurement, a plurality of (X) CSI-RS resources with different ports corresponding to different TRPs/panels may be configured. Each CSI-RS resource may include $N_1*N_2*2$ ports.

For example, $N_g = 2$ may mean X = 2. For example, when n1-n2 is (8, 2) with $N_g = 2$, the number of whole CSI-RS ports may be 2*8*2*2 = 64, and two CSI-RS resources with 32 ports for each CSI-RS resource may be configured ($N_1*N_2*2$ may be 32 at the maximum; $N_g*N_1*N_2*2$ may be greater than 32 at the maximum) .

An indication/switch between antenna configurations 1 and 2 may be configured. It may be applied to a case in which antenna configurations 1 and 2 are different (for example, a case with different ($n_1$, $n_2$)).

Signaling/report of a UE capability for the (Rel-16/17 type 2/type 2 PS codebook) type 2 multi-panel codebook may be introduced.

Signaling/report of a UE capability for antenna configuration 1/antenna configuration 2 may be introduced.

According to the present embodiment, the UE can be appropriately configured with the CSI for the multi-panel.

<Embodiment #C2>

The present embodiment relates to the CSI/codebook for the multi-panel.

When the type 2 multi-panel codebook is configured, the UE may conform to at least one of the following CSIs 1 and 2. When the type 2 multi-panel codebook is configured in addition to the Rel-16/17 type 2/type 2 PS codebook, the UE may conform to at least one of the following inter-panel CSI report methods 1 and 2.

[Inter-Panel CSI Report Method 1]

In addition to the new single-panel codebook, $N_g$-1 additional precoding matrices $W_{\varphi,i}$ (the inter-panel CSI/inter-TRP CSI, the CJT CSI) for inter-panel co-phasing may be reported. Each precoding matrix $W_{\varphi,i}$ corresponds to each panel/TRP i. The new single-panel codebook may be referred to as a type 2 single-panel codebook, or may be the Rel-16/17 type 2/type 2 PS codebook. The inter-panel CSI/inter-T RP CSI in one of Embodiments #A and #B may be applied to the report of the precoding matrix $W_{\varphi,i}$. For example, the inter-panel/TRP CSI may be reported in the CSI part 2.

For example, the type 2 multi-panel CSI (the precoding matrix for the layer l) with $N_g = 4$ may be given by the following expression.

$$\begin{bmatrix} W_l \\ W_{\varphi,2}W_l \\ W_{\varphi,3}W_l \\ W_{\varphi,4}W_l \end{bmatrix}, \qquad W_l = \begin{bmatrix} v_l \\ \varphi v_l \end{bmatrix} \qquad (C1)$$

For the layer l, $v_l$ may be a precoding matrix for one of the polarizations, $\varphi v_l$ may be a precoding matrix for the other polarization, and $\varphi$ may indicates co-phasing between the two polarizations.

[Inter-Panel CSI Report Method 2]

In addition to the new single-panel codebook, $(N_g-1)*2$ additional precoding matrices $W_{\varphi,i,j}$ (the inter-polarization inter-panel CSI/inter-TRP CSI, the CJT CSI) for inter-panel co-phasing may be reported. Each precoding matrix $W_{\varphi,i,j}$ corresponds to polarization j of each panel/TRP i. The new single-panel codebook may be referred to as a type 2 single-panel codebook, or may be the Rel-16/17 type 2/type 2 PS codebook. The CSI in one of Embodiments #A and #B may be enhanced to be (to be configurable as) the inter-panel CSI/inter-TRP CSI for each polarization (the inter-polarization/panel/TRP CSI, the precoding matrix $W_{\varphi,i,j}$). The inter-panel CSI/inter-TRP CSI may be the wideband, or may be the subband.

For example, the type 2 multi-panel CSI (the precoding matrix for the layer l) with $N_g = 4$ may be given by the following expression.

$$\begin{bmatrix} v_l \\ \varphi v_l \\ W_{\varphi,2,1} v_l \\ W_{\varphi,2,2} v_l \\ W_{\varphi,3,1} v_l \\ W_{\varphi,3,2} v_l \\ W_{\varphi,4,1} v_l \\ W_{\varphi,4,2} v_l \end{bmatrix} \quad (C2)$$

As two codebook modes, an indication/switch between inter-panel CSI report methods 1 (inter-polarization/panel/TRP CSI) and 2 (inter-panel/TRP CSI) may be configured.

Signaling/report of a UE capability for inter-panel CSI report method 1/inter-panel CSI report method 2 may be introduced.

According to the present embodiment, the UE can appropriately report the CSI for the multi-panel.

<Analysis>

The 4-TRP CJT CSI in Embodiments #A and #B can be represented by the following expression.

$$\begin{bmatrix} W_{l,1} \\ W'_{l,2} \\ W'_{l,3} \\ W'_{l,4} \end{bmatrix} = \begin{bmatrix} W_{l,1} \\ W_{\varphi,2} W_{l,2} \\ W_{\varphi,3} W_{l,3} \\ W_{\varphi,4} W_{l,4} \end{bmatrix} \quad (C3)$$

Here, the 4-TRP CJT CSI in Embodiments #A and #B includes $W_{l,i}$ different for panel/TRP i.

A difference of Embodiment #C2 from Embodiments #A and #B lies that the per-TRP CSI in the type 2 multi-panel CSI is common to/the same for four panels/TRPs. Instead of four $W_{l,i}$ in Embodiments #A and #B, in Embodiment #C (inter-panel CSI report method 1), only one $W_l$ is required. Overhead of the per-TRP CSI of Embodiment #C2 is lower than overhead of the per-TRP CSI of Embodiments #A and #B.

<Embodiment #C3>

The present embodiment relates to the CSI/codebook for the multi-panel.

For the per-TRP CSI $W_l$, configuration/definition of a part of $W_l$ being common/the same across a plurality of TRPs may be supported, or a part of $W_l$ being different across a plurality of TRPs may be supported. The UE may conform to at least one of the following common parts 1 to 5.

[Common Part 1]

$W_l$ common across a plurality of TRPs is not used (Embodiment #A/#B).

[Common Part 2]

The SD beam matrix $W_1$ is common/the same across a plurality of TRPs. The combination coefficient matrix $\tilde{W}_k$ and the FD basis matrix $W_{f,k}{}^H$ are different across a plurality of TRPs (common $W_1$, and $\tilde{W}_k$ and $W_{f,k}{}^H$ of each TRP).

[Common Part 3]

The SD beam matrix $W_1$ and the FD basis matrix $W_{f,k}{}^H$ are common/the same across a plurality of TRPs. The combination coefficient matrix $\tilde{W}_k$ is different across a plurality of TRPs. The parameters/quantity in the 4-TRP CJT CSI may be represented by the following expression.

$$\begin{bmatrix} W_1\widetilde{W}_{k,1}W_{f,k}^H \\ W_{\varphi,2}W_1\widetilde{W}_{k,2}W_{f,k}^H \\ W_{\varphi,3}W_1\widetilde{W}_{k,3}W_{f,k}^H \\ W_{\varphi,4}W_1\widetilde{W}_{k,4}W_{f,k}^H \end{bmatrix} \qquad (C4)$$

Here, the combination coefficient matrix $\tilde{W}_{k,i}$ for panel/TRP i may be different for each panel/TRP. $W_1$ and $W_{f,k}{}^H$ may be common/the same for a plurality of panels/TRPs.

[Common Part 4]

Common $W_l$ is used across a plurality of TRPs (Embodiment #C2).

[Common Part 5]

A plurality of $W_l$ are used for a plurality of TRPs, and one $W_l$ corresponds to one or more of the plurality of TRPs. For TRPs (panels) 1 to 4, the parameters/quantity in the 4-TRP CJT CSI may be represented by the following expression.

$$\begin{bmatrix} W_{l,1} \\ W_{\varphi,2}W_{l,1} \\ W_{\varphi,3}W_{l,2} \\ W_{\varphi,4}W_{l,2} \end{bmatrix} \qquad (C5)$$

Here, $W_l$ common to TRPs 1 and 2 may be represented by $W_{l,1}$, and $W_l$ common to TRPs 3 and 4 may be represented by $W_{l,2}$.
Signaling/report of a UE capability for at least one of common parts 1 to 4 and variations may be introduced.
Whether a specific reported part of $W_l$ is common/the same across a plurality of TRPs or is specific to a TRP may be reported as new CSI report contents in the CSI part 1 by the UE. The new CSI report contents are used to determine CSI contents and CSI mapping order in the CSI part 2. The new CSI report contents may include at least one of the following report contents 1 to 5.

[Report Contents 1]

Information indicating that the CSI common/the same across a plurality of TRPs is absent (the CSI of each TRP is reported).

[Report Contents 2]

Information indicating that the SD beam matrix is common/the same across a plurality of TRPs (the combination coefficient matrix and the FD basis matrix are individually reported for each TRP).

[Report Contents 3]

Information indicating that the SD beam matrix and the FD basis matrix are common/the same across a plurality of TRPs (the combination coefficient matrix is individually reported for each TRP).

[Report Contents 4]

Information indicating $W_l$ common/the same for a plurality of panels/TRPs.

[Report Contents 5]

Information indicating one of report contents 1 to 4.
Signaling/report of a UE capability for the new CSI report contents (at least one of report contents 1 to 5) may be introduced.
According to the present embodiment, the UE can appropriately report the CSI for the multi-panel.

<Embodiment #C4>

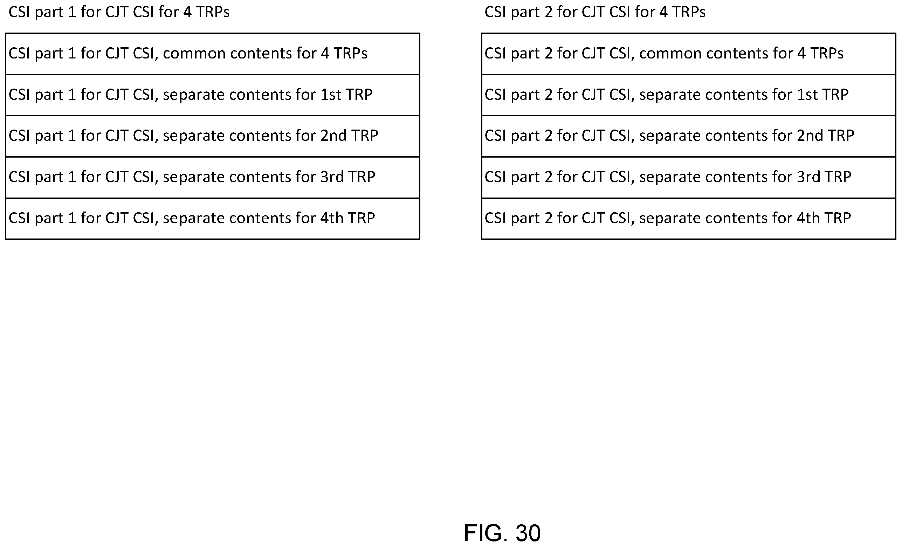

The present embodiment relates to the mapping order of the CSI contents for the multi-panel/multi TRP.
It can be said that Embodiment #C3 is an intermediate method (overhead/accuracy) between the CSI $W_l$ common to a plurality of panels/TRPs (Embodiment #C2) and the CSI $W_l$ specific to a panel/TRP (Embodiment #A/#B). The CSI contents common to a plurality of TRPs may be reported only once, and in this case, the configuration/report of the CSI specific to a TRP (Embodiment #A/#B) may be applied to Embodiment #C2/#C3.
When the CSI contents common to a plurality of TRPs and the CSI contents different for each TRP are present, the mapping order for the CSI part 1/2 may be defined.
For the CSI part 1/2, the mapping order for up to four TRP CJT CSIs is the first TRP CJT CSI, subsequently the second TRP CJT CSI, subsequently the third TRP CJT CSI, and subsequently the fourth TRP CJT CSI.
As the mapping order for Embodiment #C2/#C3, for the CSI part 1/2, the CSI contents common to a plurality of TRPs may be first mapped in each CSI part, and the CSI contents specific to each TRP may be subsequently mapped in each CSI part. The CSI contents specific to each TRP may follow the order of the first TRP CJT CSI, the second TRP CJT CSI, the third TRP CJT CSI, and the fourth TRP CJT CSI (similar to option 5-1 of Embodiment #A). FIG. 30 shows an example of the contents of the CSI parts 1 and 2 of the 4-TRP CSI CSI. In the present example, the order of the CSI contents in the CSI part 1 for the CJT CSIs is the CSI contents common to four TRPs, the CSI contents specific to the first TRP, the CSI contents specific to the second TRP, the CSI contents specific to the third TRP, and the CSI contents specific to the fourth TRP. Similarly, the order of the CSI contents in the CSI part 2 for the CJT CSIs is the CSI contents common to four TRPs, the CSI contents specific to the first TRP, the CSI contents specific to the second TRP, the CSI contents specific to the third TRP, and the CSI contents specific to the fourth TRP.
According to the present embodiment, the UE can appropriately report the CSI for the multi-panel.

<Supplements>

At least one of the embodiments described above may be applied only to the UE that has reported a specific UE capability or that supports the specific UE capability.
The specific UE capability may indicate at least one of the following:

- Support specific processing/operation/control/information regarding at least one of the embodiments described above.
- Support a report of the inter-TRP amplitude. Support one or more of a plurality of codebooks with different quantization granularities.
- Support a report of the inter-TRP phase. Support one or more of a plurality of codebooks with different quantization granularities.
- Support a report of the inter-TRP (including both of amplitude and phase) coefficients. Support one or more of a plurality of codebooks with different quantization granularities.

- Support a report of the reference CSI indicator.
- Support a report of the X-TRP CQI (aggregated CJT CQI). Support a report of the X-TRP CQI instead of the single-TRP CQI. Support a report of the X-TRP CQI in addition to the single-TRP CQI. Support a report of an X-TRP indication such as the X-TRP CQI.
- Whether to support $M_v$ common to a plurality of TRPs or support $M_v$ specific to a TRP for the CJT CSI.
- Support the same $M_v$ size for the CJT CSI.
- Support a different $M_v$ size for the CJT CSI.
- Support a start offset for each TRP report for the CJT CSI.
- Whether to support consecutive $M_v$ or support non-consecutive $M_v$ for the CJT CSI.
- Support $M_v$ specific to a layer for each TRP for the CJT CSI.
- Support $M_v$ common to a plurality of layers for each TRP for the CJT CSI.
- Value of X in X-TRP CJT. Maximum value of X in X-TRP CJT.

The specific UE capability may be a capability applied to all of the frequencies (in common regardless of a frequency), may be a capability for each frequency (for example, a cell, a band, a BWP), may be a capability for each frequency range (for example, Frequency Range 1 (FR1), FR2, FR3, FR4, FR5, FR2-1, FR2-2), or may be a capability for each subcarrier spacing (SCS).

The specific UE capability may be a capability applied to all of the duplex schemes (commonly irrespective of the duplex scheme), or may be a capability for each duplex scheme (for example, time division duplex (TDD), frequency division duplex (FDD)).

At least one of the embodiments described above may be applied when the UE is configured with specific information related to the embodiments described above using higher layer signaling. For example, the specific information may be information indicating enabling of ..., any RRC parameter for a specific release (for example, Rel. 18), or the like.

When the UE does not support at least one of the specific UE capabilities or is not configured with the specific information, the UE may apply Rel-15/16 operation, for example.

(Supplementary Note)

In reference to one embodiment of the present disclosure, the following invention is described as supplements.

[Supplementary Note 1]

A terminal including:

a control section that determines channel state information (CSI), based on a plurality of measurements respectively corresponding to a plurality of panels used for coherent joint transmission; and
a transmitting section that transmits a CSI report including the CSI.

[Supplementary Note 2]

The terminal according to supplementary note 1, wherein the control section determines the CSI, based on one of a configuration of a multi-panel codebook and number of the plurality of panels and a configuration of a single-panel codebook.

[Supplementary Note 3]

The terminal according to supplementary note 1 or 2, wherein the CSI includes a first parameter of a codebook using combination coefficients and a second parameter indicating inter-panel phase relation.

[Supplementary Note 4]

The terminal according to any one of supplementary notes 1 to 3, wherein the CSI includes a third parameter common to the plurality of panels and a fourth parameter specific to each of the plurality of panels.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

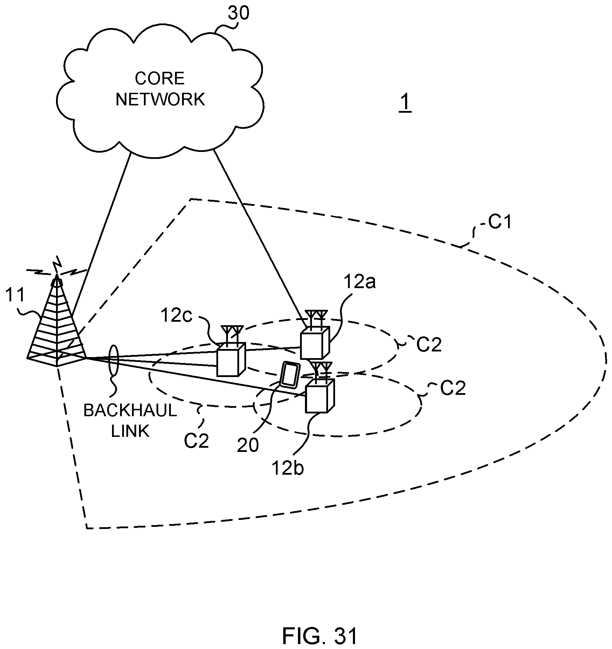

FIG. 31 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, and 5G.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

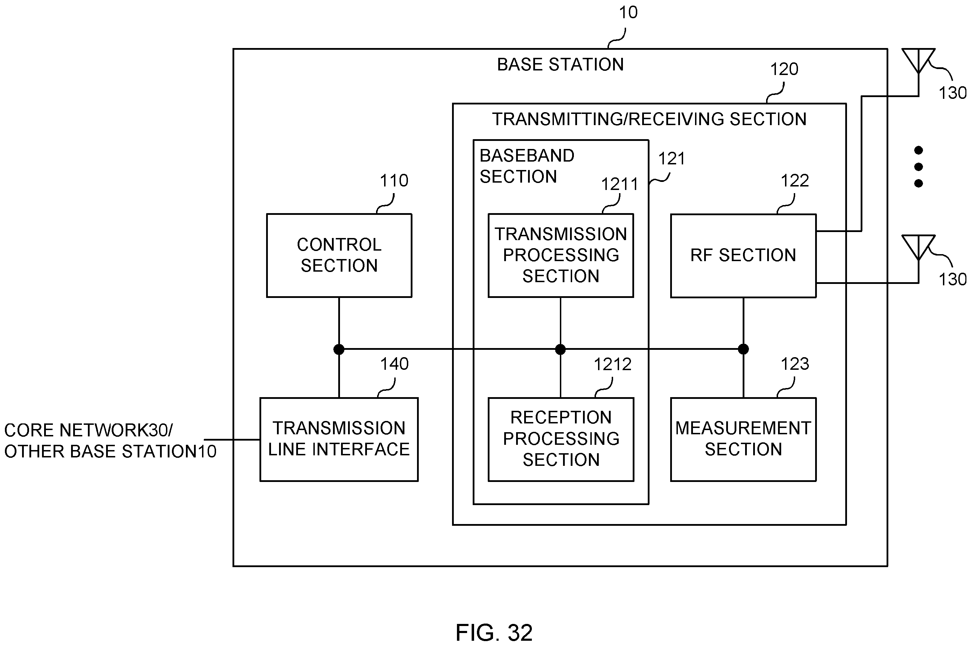

FIG. 32 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit a configuration indicating X channel measurement resources for X transmission/reception points (TRPs) for coherent joint transmission. The control section 110 may control reception of a report of measurement of the X channel measurement resources, based on the configuration.

The transmitting/receiving section 120 may transmit a configuration indicating X channel measurement resources for X transmission/reception points (TRPs) for coherent joint transmission. The control section 110 may control reception of a CSI report including X pieces of channel state information (CSIs) respectively corresponding to the X channel measurement resources, based on the configuration.

The transmitting/receiving section 120 may transmit a configuration indicating X channel measurement resources for X transmission/reception points (TRPs) for coherent joint transmission. The control section 110 may control reception of a report of channel state information (CSI) part 1 and CSI part 2, based on the configuration.

The transmitting/receiving section 120 may transmit a configuration of one CSI report including a plurality of pieces of channel state information (CSIs) respectively corresponding to a plurality of transmission/reception points for coherent joint transmission. The control section 110 may control reception of the one CSI report.

The transmitting/receiving section 120 may transmit a configuration of a CSI report including channel state information (CSI) between a plurality of transmission/reception points for coherent joint transmission. The control section 110 may control reception of the CSI report.

The transmitting/receiving section 120 may transmit a channel state information (CSI) reference signal (RS), using a plurality of panels used for coherent joint transmission. The control section 110 may control reception of a CSI report including CSI based on a plurality of measurements respectively corresponding to the plurality of panels.

(User Terminal)

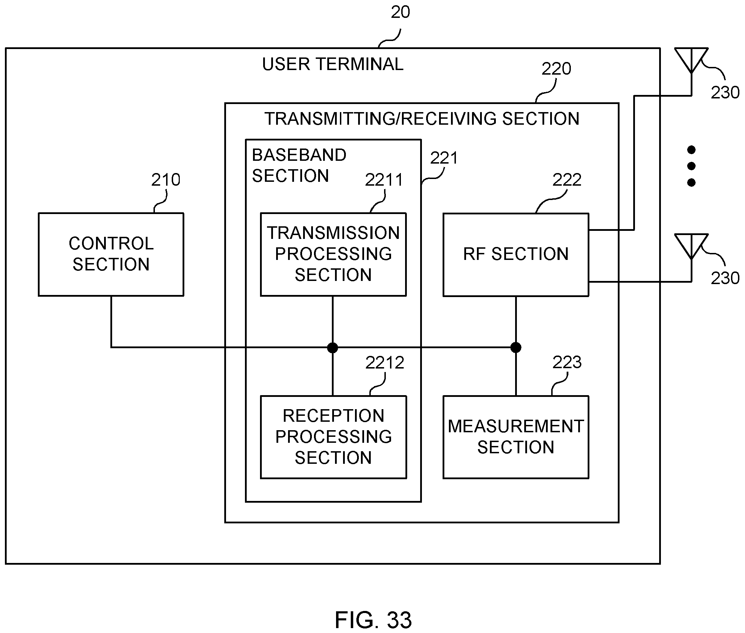

FIG. 33 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration indicating X channel measurement resources for X transmission/reception points (TRPs) for coherent joint transmission. The control section 210 may control a report of measurement of the X channel measurement resources, based on the configuration.

The configuration may indicate at least one of X and X channel state information report configurations.

The configuration may indicate a plurality of channel state information reference signal ports.

The configuration may indicate one or X interference measurement resources.

The transmitting/receiving section 220 may receive a configuration indicating X channel measurement resources for X transmission/reception points (TRPs) for coherent joint transmission. The control section 210 may control a CSI report including X pieces of channel state information (CSIs) respectively corresponding to the X channel measurement resources, based on the configuration.

Each of the X CSIs may include a channel state information reference signal (CSI-RS) resource indicator (CRI) indicating corresponding channel measurement resources and CSI based on the corresponding channel measurement resources.

Each of the X CSIs may include an index indicating a difference of at least one of phase and amplitude between a plurality of TRPs.

i-th CSI may include an index indicating a difference of at least one of phase and amplitude between at least two of first to (i-1)-th channel measurement resources, where i is 2 or greater.

The transmitting/receiving section 220 may receive a configuration indicating X channel measurement resources for X transmission/reception points (TRPs) for coherent joint transmission. The control section 210 may control a report of channel state information (CSI) part 1 and CSI part 2, based on the configuration.

The CSI part 1 for one of the X TRPs may include at least one of a channel state information reference signal (CSI-RS) resource indicator (CRI) indicating corresponding channel measurement resources and a reference CSI indicator indicating one of the X channel measurement resources.

The CSI part 2 for one of the X TRPs may include at least one of an index indicating a difference of at least one of phase and amplitude between a plurality of TRPs and a channel quality indicator (CQI) based on the X TRPs for at least one of a layer and a polarization.

The index may be included in group 2 out of group 0 to the group 2, or group 3 subsequent to the group 2.

The control section 210 may determine a plurality of pieces of channel state information (CSIs) respectively corresponding to a plurality of transmission/reception points for coherent joint transmission. The transmitting/receiving section 220 may transmit one CSI report including the plurality of CSIs.

The plurality of CSIs may be based on restriction of at least one of a rank indicator (RI), parameters for the plurality of CSIs, a maximum number of non-zero coefficients, a maximum number of spatial domain beams, and a maximum number of spatial domain vector sizes.

The control section 210 is the terminal according to claim 1 or 2, which selects best results from measurement results corresponding to one of the plurality of transmission/reception points, and determines the plurality of CSIs, based on the best results.

The control section 210 may determine the plurality of CSIs, assuming coherent joint transmission using the plurality of transmission/reception points.

The control section 210 and the transmitting/receiving section 220 may determine channel state information (CSI) between a plurality of transmission/reception points for coherent joint transmission. The transmitting/receiving section 220 may transmit a CSI report including the CSI.

The CSI report may include the CSI corresponding to one transmission/reception point out of the plurality of transmission/reception points.

The control section 210 may select a plurality of best measurement results respectively corresponding to the plurality of transmission/reception points, and determine the CSI, based on the plurality of best measurement results.

The control section 210 may select best measurement results corresponding to one of the plurality of transmission/reception points, and determine the CSI, based on the best measurement results.

The control section 210 may determine channel state information (CSI), based on a plurality of measurements respectively corresponding to a plurality of panels used for coherent joint transmission. The transmitting/receiving section 220 may transmit a CSI report including the CSI.

The control section 210 may determine the CSI, based on one of a configuration of a multi-panel codebook and number of the plurality of panels and a configuration of a single-panel codebook.

The CSI may include a first parameter of a codebook using combination coefficients and a second parameter indicating inter-panel phase relation.

The CSI may include a third parameter common to the plurality of panels and a fourth parameter specific to each of the plurality of panels.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

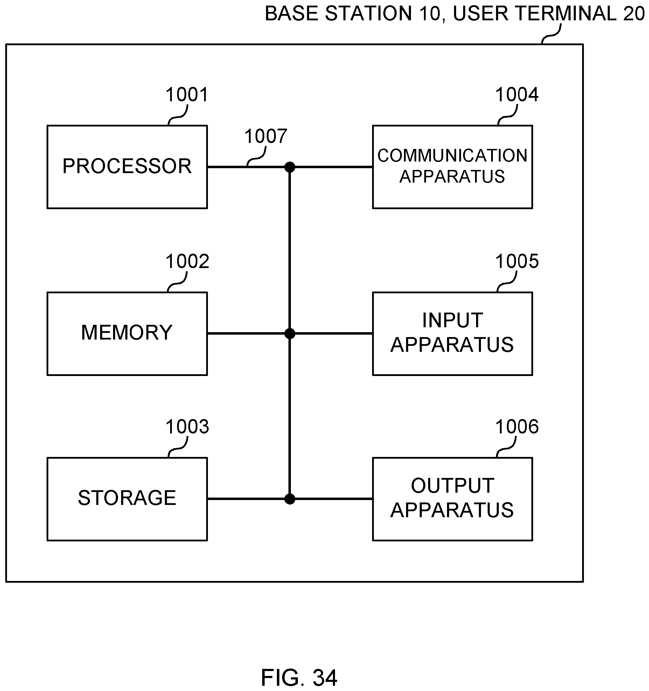

For example, a base station, a user terminal, and so on according to one embodiment of the present disclosure may function as a computer that executes the processes of the radio communication method of the present disclosure. FIG. 34 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG)," a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the base station transmitting information to the terminal may be interchangeably interpreted as the base station indicating control/operation based on the information to the terminal.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

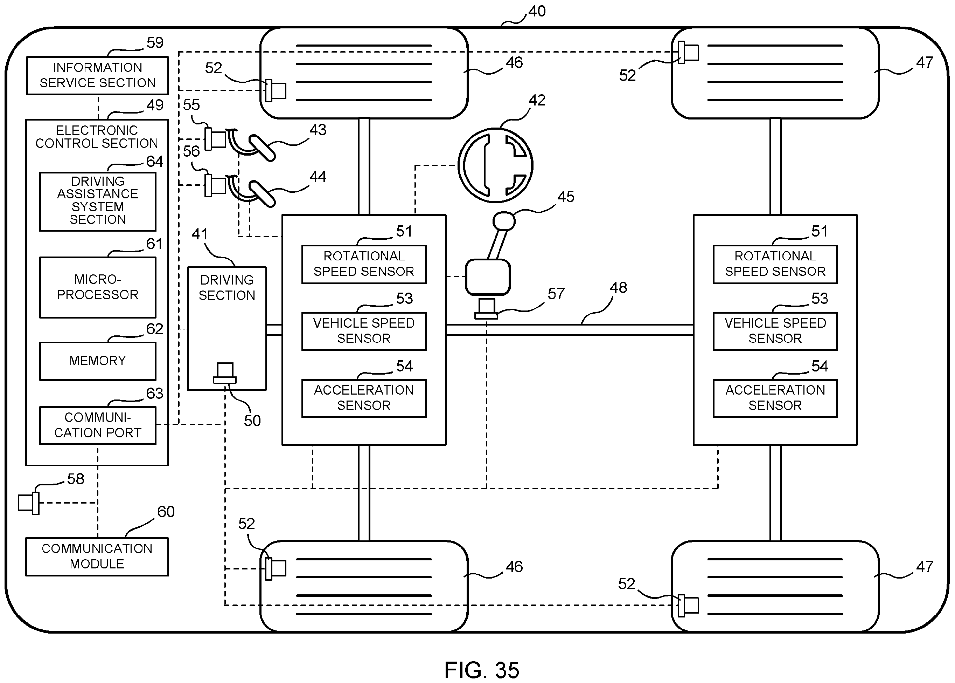

FIG. 35 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/ multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, intervehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "less than or equal to", "less than", "greater than or equal to", "greater than", "equal to", and the like may be interchangeably interpreted. In the present disclosure, words meaning "good", "poor", "large", "small", "high", "low", "early", "late", "wide", "narrow", and the like may be interchangeably interpreted, regardless of the positive degree, the comparative degree, and the superlative degree. In the present disclosure, words meaning "good", "poor", "large", "small", "high", "low", "early", "late", "wide", "narrow", and the like may be interchangeably interpreted as expressions provided with "i-th" (i is any integer), regardless of the positive degree, the comparative degree, or the superlative degree (for example, "highest" may be interchangeably interpreted "i-th highest").

In the present disclosure, "of", "for", "regarding", "related to", "associated with", and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

   a control section that determines channel state information (CSI), based on a plurality of measurements respectively corresponding to a plurality of panels used for coherent joint transmission; and
   a transmitting section that transmits a CSI report including the CSI.

2. The terminal according to claim 1, wherein
   the control section determines the CSI, based on one of a configuration of a multi-panel codebook and number of the plurality of panels and a configuration of a single-panel codebook.

3. The terminal according to claim 1, wherein
   the CSI includes a first parameter of a codebook using combination coefficients and a second parameter indicating interpanel phase relation.

4. The terminal according to claim 1, wherein
   the CSI includes a third parameter common to the plurality of panels and a fourth parameter specific to each of the plurality of panels.

5. A radio communication method for a terminal, comprising:

   determining channel state information (CSI), based on a plurality of measurements respectively corresponding to a plurality of panels used for coherent joint transmission; and
   transmitting a CSI report including the CSI.

6. A base station comprising:

   a transmitting section that transmits a channel state information (CSI) reference signal (RS), using a plurality of panels used for coherent joint transmission; and
   a control section that controls reception of a CSI report including CSI based on a plurality of measurements respectively corresponding to the plurality of panels.

FIG. 1

Maximum number of antenna elements

| | 0.7 GHz | 4 GHz | 30 GHz | 70 GHz |
|---|---|---|---|---|
| TRP | 64 | 256 | 256 | 1024 |
| UE | 4 | 8 | 32 | 32 |

FIG. 2

## Type I single-panel

| Number of CSI-RS antenna ports | (N1,N2) | CSI Antenna Port Array (Logical Configuration) |
|:---:|:---:|:---:|
| 4 | (2,1) | ⊠ ⊠ |
| 8 | (2,2) | ⊠ ⊠<br>⊠ ⊠ |
| | (4,1) | ⊠ ⊠ ⊠ ⊠ |
| 12 | (3,2) | ⊠ ⊠ ⊠<br>⊠ ⊠ ⊠ |
| | (6,1) | ⊠ ⊠ ⊠ ⊠ ⊠ ⊠ |
| 16 | (4,2) | ⊠ ⊠ ⊠ ⊠<br>⊠ ⊠ ⊠ ⊠ |
| | (8,1) | ⊠ ⊠ ⊠ ⊠ ⊠ ⊠ ⊠ ⊠ |
| 24 | (4,3) | ⊠ ⊠ ⊠ ⊠<br>⊠ ⊠ ⊠ ⊠<br>⊠ ⊠ ⊠ ⊠ |
| | (6,2) | ⊠ ⊠ ⊠ ⊠ ⊠ ⊠<br>⊠ ⊠ ⊠ ⊠ ⊠ ⊠ |
| | (12,1) | ⊠ ⊠ ⊠ ⊠ ⊠ ⊠ ⊠ ⊠ ⊠ ⊠ ⊠ ⊠ |
| 32 | (4,4) | ⊠ ⊠ ⊠ ⊠<br>⊠ ⊠ ⊠ ⊠<br>⊠ ⊠ ⊠ ⊠<br>⊠ ⊠ ⊠ ⊠ |
| | (8,2) | ⊠ ⊠ ⊠ ⊠ ⊠ ⊠ ⊠ ⊠<br>⊠ ⊠ ⊠ ⊠ ⊠ ⊠ ⊠ ⊠ |
| | (16,2) | ⊠ ⊠ ⊠ ⊠ ⊠ ⊠ ⊠ ⊠ ⊠ ⊠ ⊠ ⊠ ⊠ ⊠ ⊠ ⊠ |

## FIG. 3

Type I multi-panel

| Number of CSI-RS antenna ports | (Ng,N1,N2) | CSI Antenna Port Array (Logical Configuration) |
|---|---|---|
| 8 | (2,2,1) | ☒ ☒ ☒ ☒ |
| 16 | (2,4,1) | ☒ ☒ ☒ ☒ ☒ ☒ ☒ ☒ |
| | (4,2,1) | ☒ ☒ ☒ ☒ ☒ ☒ ☒ ☒ |
| | (2,2,2) | ☒ ☒ ☒ ☒ / ☒ ☒ ☒ ☒ |
| 32 | (2,8,1) | ☒ ☒ ☒ ☒ ☒ ☒ ☒ ☒ ☒ ☒ ☒ ☒ ☒ ☒ ☒ ☒ |
| | (4,4,1) | ☒ ☒ ☒ ☒ ☒ ☒ ☒ ☒ ☒ ☒ ☒ ☒ ☒ ☒ ☒ ☒ |
| | (2,4,2) | ☒ ☒ ☒ ☒ ☒ ☒ ☒ ☒ / ☒ ☒ ☒ ☒ ☒ ☒ ☒ ☒ |
| | (4,2,2) | ☒ ☒ ☒ ☒ ☒ ☒ ☒ ☒ / ☒ ☒ ☒ ☒ ☒ ☒ ☒ ☒ |

FIG. 4

Mapping of elements of $i_{2,3,l}$: $k_{l,p}^{(1)}$ to $p_{l,p}^{(1)}$

| $k_{l,p}^{(1)}$ | $p_{l,p}^{(1)}$ | $k_{l,p}^{(1)}$ | $p_{l,p}^{(1)}$ | $k_{l,p}^{(1)}$ | $p_{l,p}^{(1)}$ | $k_{l,p}^{(1)}$ | $p_{l,p}^{(1)}$ |
|---|---|---|---|---|---|---|---|
| 0 | Reserved | 4 | $\left(\dfrac{1}{2048}\right)^{1/4}$ | 8 | $\left(\dfrac{1}{128}\right)^{1/4}$ | 12 | $\left(\dfrac{1}{8}\right)^{1/4}$ |
| 1 | $\dfrac{1}{\sqrt{128}}$ | 5 | $\dfrac{1}{2\sqrt{8}}$ | 9 | $\dfrac{1}{\sqrt{8}}$ | 13 | $\dfrac{1}{\sqrt{2}}$ |
| 2 | $\left(\dfrac{1}{8192}\right)^{1/4}$ | 6 | $\left(\dfrac{1}{512}\right)^{1/4}$ | 10 | $\left(\dfrac{1}{32}\right)^{1/4}$ | 14 | $\left(\dfrac{1}{2}\right)^{1/4}$ |
| 3 | $\dfrac{1}{8}$ | 7 | $\dfrac{1}{4}$ | 11 | $\dfrac{1}{2}$ | 15 | 1 |

## FIG. 5

Mapping of elements of $i_{2,4,l}$: $k_{l,i,f}^{(2)}$ to $p_{l,i,f}^{(2)}$

| $k_{l,i,f}^{(2)}$ | $p_{l,i,f}^{(2)}$ |
|---|---|
| 0 | $\dfrac{1}{8\sqrt{2}}$ |
| 1 | $\dfrac{1}{8}$ |
| 2 | $\dfrac{1}{4\sqrt{2}}$ |
| 3 | $\dfrac{1}{4}$ |
| 4 | $\dfrac{1}{2\sqrt{2}}$ |
| 5 | $\dfrac{1}{2}$ |
| 6 | $\dfrac{1}{\sqrt{2}}$ |
| 7 | $1$ |

FIG. 6

FIG. 7

# FIG. 8A

Rel.15/16 Type II Port Selection

# FIG. 8B

| | | | |
|---|---|---|---|
| Port 1 | $b_1$ | $b_1$ | ... |
| Port 2 | $b_2$ | $b_2$ | ... |
| Port 3 | $b_3$ | $b_3$ | ... |
| Port 4 | $b_4$ | $b_4$ | ... |
| Port 5 | $b_5$ | $b_5$ | ... |
| Port 6 | $b_6$ | $b_6$ | ... |
| Port 7 | $b_7$ | $b_7$ | ... |
| Port 8 | $b_8$ | $b_8$ | ... |

Frequency (delay)

## FIG. 9A

Rel.17 Type II Port Selection

gNB

Port 6

Port 5

Port 4

Port 3

The Same SD beam
but different FD beam

## FIG. 9B

| | | | |
|---|---|---|---|
| Port 1 | $b_1 f_{1,0}$ | $b_1 f_{1,1}$ | ... |
| Port 2 | $b_2 f_{2,0}$ | $b_2 f_{2,1}$ | ... |
| Port 3 | $b_3 f_{3,0}$ | $b_3 f_{3,1}$ | ... |
| Port 4 | $b_4 f_{4,0}$ | $b_4 f_{4,1}$ | ... |
| Port 5 | $b_5 f_{5,0}$ | $b_5 f_{5,1}$ | ... |
| Port 6 | $b_6 f_{6,0}$ | $b_6 f_{6,1}$ | ... |
| Port 7 | $b_7 f_{7,0}$ | $b_7 f_{7,1}$ | ... |
| Port 8 | $b_8 f_{8,0}$ | $b_8 f_{8,1}$ | ... |

Frequency (delay)

FIG. 10A

FIG. 10B

EP 4 510 686 A1

FIG. 11A

inter-site MTRP

FIG. 11B

intra-site MTRP

X=4

FIG. 12

N=2, X=4

CSI-RS resource #1

CSI-RS resource #4

UE

CSI-RS resource #5

CSI-RS resource #8

CSI-RS resource #1

CSI-RS resource #4

UE

CSI-RS resource #11

CSI-RS resource #9

EP 4 510 686 A1

FIG. 13

CSI-RS resource #1:reference

CSI-RS resource #2

associated

UE

CSI-RS resource #3

CSI-RS resource #4

FIG. 14

## FIG. 15A

| CMR configuration (Option 1-1) | CSI-RS resource #1 | CSI-RS resource #4 | CSI-RS resource #5 | CSI-RS resource #8 |
|---|---|---|---|---|
| IMR configuration (Option 2-B) | ZP CSI-RS resource #2 | ZP CSI-RS resource #2 | ZP CSI-RS resource #2 | ZP CSI-RS resource #2 |

## FIG. 15B

| CMR configuration (Option 1-1) | CSI-RS resource #1 | CSI-RS resource #4 | CSI-RS resource #5 | CSI-RS resource #8 |
|---|---|---|---|---|
| IMR configuration (Option 2-B) | ZP CSI-RS resource #2 | | | |

CSI-RS resource #1:  CRI+S-TRP CSI as reference CSI

CSI-RS resource #4:  CRI+S-TRP CSI, inter-TRP amplitude/phase PMI based on reference CSI

UE

CSI-RS resource #5:  CRI+S-TRP CSI, inter-TRP amplitude/phase PMI based on reference CSI

CSI-RS resource #8:  CRI+S-TRP CSI, inter-TRP amplitude/phase PMI based on reference CSI

FIG. 16

| PMI index | new CSI information for CJT CSI |
|---|---|
| $i_{3,1}$ | Inter-TRP phasing index (compared with reference CSI/TRP) |
| $i_{3,2}$ | Inter-TRP amplitude index (compared with reference CSI/TRP) |
| $i_3$ | Inter-TRP index (compared with reference CSI/TRP) |

FIG. 17

CSI-RS resource #1: CRI+S-TRP CSI as reference CSI

CSI-RS resource #4: CRI+S-TRP CSI, inter-TRP amplitude/phase PMI based on reference CSI

UE

CSI-RS resource #5: CRI+S-TRP CSI, inter-TRP amplitude/phase PMI based on reference CSI, and inter-TRP amplitude/phase PMI based on S-TRP CSI of CSI-RS resource#4

CSI-RS resource #8: CRI+S-TRP CSI, inter-TRP amplitude/phase PMI based on reference CSI, inter-TRP amplitude/phase PMI based on S-TRP CSI of CSI-RS resource#4, and inter-TRP amplitude/phase PMI based on S-TRP CSI of CSI-RS resource#5

FIG. 18

| PMI index | new CSI information for CJT CSI |
|---|---|
| $i_{3,1}$ | Inter-TRP phasing index (compared with reference CSI/TRP) |
| $i_{3,2}$ | Inter-TRP amplitude index (compared with reference CSI/TRP) |
| $i_{3,2}$ | Inter-TRP phasing index (compared with 2nd reported CSI/TRP) |
| $i_{3,4}$ | Inter-TRP amplitude index (compared with 2nd reported CSI/TRP) |
| $i_{3,5}$ | Inter-TRP phasing index (compared with 3rd reported CSI/TRP) |
| $i_{3,6}$ | Inter-TRP amplitude index (compared with 3rd reported CSI/TRP) |

FIG. 19

EP 4 510 686 A1

CSI-RS resource #1:  CRI+S-TRP CSI as reference CSI

CSI-RS resource #4:         CRI+S-TRP CSI (2-TRP CJT CQI based on CSI-RS resource #1 and #4)

UE

CSI-RS resource #5:         CRI+S-TRP CSI (3-TRP CJT CQI based on CSI-RS resource #1, #4,  and #5)

CSI-RS resource #8:  CRI+S-TRP CSI (4-TRP CJT CQI based on CSI-RS resource #1, #4,  #5, and #8)

EP 4 510 686 A1

FIG. 20

CSI-RS resource #1:  CRI+S-TRP CSI as reference CSI

CSI-RS resource #4:    CRI+S-TRP CSI, 2-TRP CJT CQI based on CSI-RS resource #1 and #4

UE

CSI-RS resource #5:    CRI+S-TRP CSI, 2-TRP CJT CQI / 3-TRP CJT CQI

CSI-RS resource #8:  CRI+S-TRP CSI, 2-TRP CJT CQI / 3-TRP CJT CQI / 4-TRP CJT CQI

FIG. 21

| Index | Value |
|-------|-------|
| 0 | Reserved or 0 |
| ... | ... |
| M-4 | $\sqrt{1/16}$ |
| M-3 | $\sqrt{1/16}$ |
| M-2 | $\sqrt{1/16}$ |
| M-1 | $\sqrt{1/16}$ |
| M | 1 |

FIG. 22

| Index | Value |
|-------|-------|
| 0 | 1 |
| 1 | $e^{j2\pi/P}$ |
| 2 | $e^{j4\pi/P}$ |
| 3 | $e^{j6\pi/P}$ |
| ... | ... |
| P-1 | $e^{j2\pi(P-1)/P}$ |

FIG. 23

| Index | Value |
|-------|-------|
| 0 | 1 |
| 1 | $e^{j2\pi/P}$ |
| 2 | $e^{j4\pi/P}$ |
| ... | ... |
| P-1 | $e^{j2\pi(P-1)/P}$ |
| P | $\sqrt{1/2}\,e^{j2\pi/P}$ |
| P+1 | $\sqrt{1/2}\,e^{j4\pi/P}$ |
| ... | ... |

FIG. 24

# FIG. 25A

Option 5-1

CSI part 1 for CJT CSI for 4 TRPs

| CSI part 1 for CJT CSI for a TRP (1st CJT CSI) |
|---|
| CSI part 1 for CJT CSI for a TRP (2nd CJT CSI) |
| CSI part 1 for CJT CSI for a TRP (3rd CJT CSI) |
| CSI part 1 for CJT CSI for a TRP (4th CJT CSI) |

CSI part 2 for CJT CSI for 4 TRPs

| CSI part 2 for CJT CSI for a TRP (1st CJT CSI) |
|---|
| CSI part 2 for CJT CSI for a TRP (2nd CJT CSI) |
| CSI part 2 for CJT CSI for a TRP (3rd CJT CSI) |
| CSI part 2 for CJT CSI for a TRP (4th CJT CSI) |

# FIG. 25B

Option 5-2

CSI part 1 for CJT CSI for 4 TRPs

| CSI part 1 for CJT CSI for a TRP (1st CJT CSI) |
|---|

CSI part 2 for CJT CSI for 4 TRPs

| CSI part 2 for CJT CSI for a TRP (1st CJT CSI) |
|---|
| CSI part 1 and part 2 for CJT CSI for a TRP (2nd CJT CSI) |
| CSI part 1 and part 2 for CJT CSI for a TRP (3rd CJT CSI) |
| CSI part 1 and part 2 for CJT CSI for a TRP (4th CJT CSI) |

FIG. 26A

FIG. 26B

1st TRP CSI    $2L_1$   $L_1=4$    $M_v$

2nd TRP CSI    $2L_2$   $L_2=2$    $M_v$

1st TRP CSI    $2L$   $\beta=1/2$    $M_v$

2nd TRP CSI    $2L$   $\beta=1/4$    $M_v$

EP 4 510 686 A1

one SCI per layer per TRP

FIG. 27

one SCI per layer across all TRPs

FIG. 28

one SCI per layer per TRP

configured FD bases

$M_{v,1}$

1<sup>st</sup> TRP CSI    $2L_1$      SCI

$M_{v,2}$

2<sup>nd</sup> TRP CSI    $2L_2$      SCI

$M_{v,3}$

3<sup>rd</sup> TRP CSI    $2L_3$      SCI

$M_{v,4}$

4<sup>th</sup> TRP CSI    $2L_4$      SCI

FIG. 29

CSI part 1 for CJT CSI for 4 TRPs

| CSI part 1 for CJT CSI, common contents for 4 TRPs |
|---|
| CSI part 1 for CJT CSI, separate contents for 1st TRP |
| CSI part 1 for CJT CSI, separate contents for 2nd TRP |
| CSI part 1 for CJT CSI, separate contents for 3rd TRP |
| CSI part 1 for CJT CSI, separate contents for 4th TRP |

CSI part 2 for CJT CSI for 4 TRPs

| CSI part 2 for CJT CSI, common contents for 4 TRPs |
|---|
| CSI part 2 for CJT CSI, separate contents for 1st TRP |
| CSI part 2 for CJT CSI, separate contents for 2nd TRP |
| CSI part 2 for CJT CSI, separate contents for 3rd TRP |
| CSI part 2 for CJT CSI, separate contents for 4th TRP |

FIG. 30

FIG. 31

FIG. 32

EP 4 510 686 A1

FIG. 33

EP 4 510 686 A1

BASE STATION 10, USER TERMINAL 20

1001

PROCESSOR

1007

1004

COMMUNICATION APPARATUS

1002

MEMORY

1005

INPUT APPARATUS

1003

STORAGE

1006

OUTPUT APPARATUS

FIG. 34

FIG. 35

## INTERNATIONAL SEARCH REPORT

International application No.

**PCT/JP2022/017917**

### A. CLASSIFICATION OF SUBJECT MATTER

*H04W 24/10*(2009.01)i; *H04W 72/0457*(2023.01)i
FI: H04W24/10; H04W72/04 111

According to International Patent Classification (IPC) or to both national classification and IPC

### B. FIELDS SEARCHED

Minimum documentation searched (classification system followed by classification symbols)

H04W24/10; H04W72/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | HUAWEI, HISILICON. Updated views on Rel-18 downlink MIMO enhancements[online], 3GPP TSG RAN #93e RP-212150, 06 September 2021, Internet<URL:https://www.3gpp.org/ftp/tsg_ran/TSG_RAN/TSGR_93e/Docs/RP-212150.zip> pp. 3, 4, 10 | 1, 5–6 |
| A | pp. 3, 4, 10 | 2-4 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 November 2022** | **15 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010